# EUROPEAN PATENT SPECIFICATION

(11) **EP 3 250 537 B1**
(45) Date of publication and mention of the grant of the patent: **03.11.2021**
(21) Application number: 16708493.8
(22) Date of filing: 28.01.2016
(51) Int. Cl.: C04B 26/06, C04B 26/04, C04B 26/14, H01M 10/0525, H01M 50/403, H01M 50/431, H01M 50/446, H01M 50/449, H01M 8/1051, C04B 111/00, C04B 103/00

(54) **CERAMIC BINDER COMPOSITION FOR CERAMIC COATED SEPARATOR FOR LITHIUM ION BATTERIES, METHODS OF PRODUCING SAME, AND USES THEREOF**
KERAMISCHE BINDEMITTELZUSAMMENSETZUNG FÜR KERAMIKBESCHICHTETEN SEPARATOR FÜR LITHIUM-IONEN-BATTERIEN, VERFAHREN ZUR HERSTELLUNG DAVON UND VERWENDUNGEN DAVON
COMPOSITION DE LIANT CÉRAMIQUE POUR SÉPARATEUR À REVÊTEMENT CÉRAMIQUE DESTINÉ AUX BATTERIES LITHIUM-ION, PROCÉDÉS POUR LEUR FABRICATION ET LEUR UTILISATION

(30) Priority: 28.01.2015 US 201562108776 P
(43) Date of publication of application: 06.12.2017
(73) Proprietor: Hercules LLC, Wilmington, DE 19808 (US)
(72) Inventor: ALHARIZAH, Alaa, Dover, NJ 07801 (US); CHU, Sung Gun, Hockessin, DE 19707 (US); GOLIASZEWSKI, Alan Edward, Hockessin, DE 19707 (US); HOOD. David K., Basking Ridge, NJ 07920 (US); PENG, Shufu, Hockessin, DE 19707 (US); TALLON, Michael A., Aberdeen, NJ 07747 (US); FILLIPO, Bruce, Springfield, Pennsylvania 19064 (US)
(74) Representative: Hoffmann Eitle
(86) International application number: PCT/US2016/015466
(87) International publication number: WO 2016/123404

(56) References cited:
- EP-A1- 1 947 722
- WO-A1-2013/127737
- US-A1- 2004 101 757
- US-A1- 2007 190 427
- US-A1- 2010 206 804
- US-A1- 2011 081 601
- US-A1- 2014 186 680
- US-B2- 8 771 859

## Description

### FIELD

The presently disclosed process(es), procedure(s), method(s), product(s), result(s), and/or concept(s) (collectively referred to hereinafter as the "present disclosure") relates generally to a ceramic binder composition and uses thereof. More particularly, but not by way of limitation, the present disclosure relates to a ceramic coated separator used in, for example but without limitation, lithium ion batteries. Additionally, the present disclosure relates generally to methods of producing a ceramic binder composition, a ceramic coated separator, and an electrochemical cell for a battery comprising the ceramic coated separator. The present invention as defined in the claims relates to a ceramic binder composition and a ceramic slurry composition.

### BACKGROUND

Lithium ion batteries are used in an array of products including medical devices, electric cars, airplanes, and most notably, consumer products such as laptop computers, cell phones, and cameras. Due to their high energy densities, high operating voltages, and low self-discharges, lithium ion batteries have overtaken the secondary battery market and continue to find new uses in developing industries and products.

Generally, lithium ion batteries (LIBs) comprise an anode, a cathode, and an electrolyte material such as an organic solvent containing a lithium salt. More specifically, the anode and cathode (collectively, "electrodes") are formed by mixing either an anode active material or a cathode active material with a binder and a solvent to form a paste or slurry which is then coated and dried on a current collector, such as aluminum or copper, to form a film on the current collector. The anode and cathode are then layered and coiled prior to being housed in a pressurized casing containing an electrolyte material, which all together form a lithium ion battery.

Additionally, inbetween the anode and cathode is a separator that not only separates the anode and cathode but also enables the movement of ions between the electrodes. The main function of the separator is to keep the anode and cathode apart to prevent electrical short circuits while also allowing the ions to close the circuit during the passage of current through the battery. The separator generally comprises at least one permeable membrane usually comprising a nonwoven fabric or a polymer film made of, for example but without limitation, a polyolefin.

A separator's quality is evaluated by a number of factors including, for example, chemical stability, thickness, porosity, pore size, permeability, mechanical strength, wettability, thermal stability, and thermal shutdown of the separator. These properties also influence the safety and electrochemical performance of any battery using such a separator. As the demand for batteries having improved performance increases - especially for lithium ion batteries - a need has emerged for better performing separators. This need has recently led to the practice of applying a polymer coating and/or a ceramic polymer coating (i.e., a "ceramic coating") to separators in order to form coated separators having improved safety and electrochemical performance. *See, e.g.,* International Publication No. WO 2014/025868, U.S. Patent Application Publication Nos. 2013/0224631, 2014/0045033, and 2008/038700, and U.S. Patent Nos. 8,372,475 and 8,771,859.

US 2004/101757 A1 relates to a partially crosslinked adhesive-supported porous film for battery separator. US 2011/0081601 A1 relates to a nonwoven fabric having a crosslinking material, which may be used as a separator in batteries and capacitors. US 2010/0206804 A1 relates to a ply comprisign a fibrous nonwoven web fabric forming a foundational structure, wherein the foundational structure includes fibers forming first pores and is partially filled with particles. EP 1 947 722 A1 relates to a process for production of fuel cell separators. US 2014/186680 A1 relates to a separator comprising a porous substrate having a plurality of pores and a porous coating layer provided on at least one surface of the porous substrate and formed from a mixture of plural inorganic particles and a binder polymer.

However, the compositions used to form the polymer coatings and/or ceramic coatings have room for improvement, especially with regard to the binders used to form the coatings. Specifically, there is a need for ceramic binder compositions capable of forming ceramic coated separators that have desirable mechanical properties (e.g., less shrinkage at elevated temperatures) and electrolyte resistance (e.g., insoluble and/or decreased swelling in electrolyte), and that do not significantly reduce the electrochemical performance of electrochemical cells when used therein. As presently disclosed, it has been discovered that, when coated on a treated separator, a ceramic binder composition comprising (a) at least one ceramic particle and (b) a binder comprising a crosslinking agent at least partially crosslinked with a copolymer produced from monomers comprising (i) vinylpyrrolidone and (ii) at least one monomer having a functionality selected from the group consisting of an amine, an epoxide, and combinations thereof, provides a ceramic coated separator having desirable properties. It was also discovered that, when coated on a treated or untreated separator, a ceramic binder composition comprising (a) at least one ceramic particle, (b) a binder comprising a crosslinking agent at least partially crosslinked with a copolymer produced from monomers comprising (i) vinylpyrrolidone and (ii) at least one monomer having a functionality selected from the group consisting of an amine, an epoxide, and combinations thereof, and (c) a surfactant, provides a ceramic coated separator also having desirable properties. These properties include desirable permeability and electrolyte wettability properties as well as low shrinkage and suitable spacing properties, all of which make the ceramic coated separators desirable for use in, for example but without limitation, lithium ion batteries.

### BRIEF DESCRIPTION OF THE DRAWINGS

Various examples, aspects, and embodiments of the present disclosure are described below in the appended drawings to assist those of ordinary skill in the relevant art in making and using the subject matter herein. It should be recognized that these figures are merely illustrative of the principles of the present disclosure. Numerous additional examples, embodiments, modifications, and adaptations thereof will be described below and are readily apparent to those skilled in the art without departing from the scope of the present disclosure as defined by the appended claims.
FIG. 1 is an illustrative representation of the shrinkage incurred by select ceramic coated separators and a non-coated separator, as described below, when treated at 140 °C for 1 hour.
FIG. 2 is an illustrative representation of the shrinkage incurred by select ceramic coated separators and a non-coated separator, as described below, when treated at 140 °C for 1 hour.
FIG. 3 is an illustrative representation of the shrinkage incurred by select ceramic coated separators, as described below, when treated at 140 °C for 1 hour.
FIG. 4 is an illustration of the half coin cells described below.
FIGS. 5a and 5b are graphical representations of the charge capacity and discharge capacity, respectively, of select half coin cells, as described below.
FIG. 6 is a graphical representation of the C-rate dependence of select half coin cells, as described below, as measured by evaluating the capacity of the select half coin cells at varying C-rates.
FIG. 7 is a graphical representation of the impedance of select half coin cells, as described below, without prior conditioning (panel A) and with prior conditioning (panel B).
FIG. 8 is an illustrative representation of the shrinkage incurred by select ceramic coated separators, as described below, when heated at 167 °C for 30 minutes.
FIG. 9 is an illustrative representation of the shrinkage incurred by a select ceramic coated separator, as described below, when heated at 140 °C for 30 minutes and when coated at 2 µm (panel A) and 4 µm (panel B).
FIG.10 is a graphical representation of the capacity of select half coin cells.
FIG.11 is a graphical representation of the capacity of select half coin cells.
FIG. 12 is a graphical representation of the C-rate dependence of select half coin cells, as described below, as measured by evaluating the capacity of the select half coin cells at varying C-rates.
FIG. 13 is a graphical representation of the C-rate dependence of select half coin cells, as described below, as measured by evaluating the capacity of the select half coin cells at varying C-rates.
FIG. 14 is graphical representation of the impedance of select half coin cells, as described below, with prior conditioning.
FIG. 15 is graphical representation of the impedance of select half coin cells, as described below, with prior conditioning.

### DETAILED DESCRIPTION

Before explaining at least one embodiment of the present disclosure in detail, it is to be understood that the present disclosure is not limited in its application to the details of construction and the arrangement of the components or steps or methodologies set forth in the following description or illustrated in the drawings. The present disclosure is capable of other embodiments or of being practiced or carried out in various ways. Also, it is to be understood that the phraseology and terminology employed herein is for the purpose of description and should not be regarded as limiting.

Unless otherwise defined herein, technical terms used in connection with the present disclosure shall have the meanings that are commonly understood by those of ordinary skill in the art. Further, unless otherwise required by context, singular terms shall include pluralities and plural terms shall include the singular.

All patents, published patent applications, and non-patent publications mentioned in the specification are indicative of the level of skill of those skilled in the art to which the present disclosure pertains.

All of the articles and/or methods disclosed herein can be made and executed without undue experimentation in light of the present disclosure. While the articles and methods of the present disclosure have been described in terms of preferred embodiments, it will be apparent to those of ordinary skill in the art that variations may be applied to the articles and/or methods and in the steps or in the sequence of steps of the method(s) described herein without departing from the concept and scope of the present disclosure as defined in the appended claims. All such similar substitutes and modifications apparent to those skilled in the art are deemed to be within the scope and concept of the present disclosure.

As utilized in accordance with the present disclosure, the following terms, unless otherwise indicated, shall be understood to have the following meanings.

The use of the word "a" or "an" when used in conjunction with the term "comprising" may mean "one," but it is also consistent with the meaning of "one or more," "at least one," and "one or more than one." The use of the term "or" is used to mean "and/or" unless explicitly indicated to refer to alternatives only if the alternatives are mutually exclusive, although the disclosure supports a definition that refers to only alternatives and "and/or." Throughout this application, the term "about" is used to indicate that a value includes the inherent variation of error for the quantifying device, the method(s) being employed to determine the value, or the variation that exists among the study subjects. For example, but not by way of limitation, when the term "about" is utilized, the designated value may vary by plus or minus twelve percent, or eleven percent, or ten percent, or nine percent, or eight percent, or seven percent, or six percent, or five percent, or four percent, or three percent, or two percent, or one percent. The use of the term "at least one" will be understood to include one as well as any quantity more than one, including but not limited to, 1, 2, 3, 4, 5, 10, 15, 20, 30, 40, 50, 100, etc. The term "at least one" may extend up to 100 or 1000 or more depending on the term to which it is attached. In addition, the quantities of 100/1000 are not to be considered limiting as lower or higher limits may also produce satisfactory results. In addition, the use of the term "at least one of X, Y, and Z" will be understood to include X alone, Y alone, and Z alone, as well as any combination of X, Y, and Z. The use of ordinal number terminology (i.e., "first", "second", "third", "fourth", etc.) is solely for the purpose of differentiating between two or more items and, unless otherwise stated, is not meant to imply any sequence or order or importance to one item over another or any order of addition.

As used herein, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. The terms "or combinations thereof" and "and/or combinations thereof" as used herein refer to all permutations and combinations of the listed items preceding the term. For example, "A, B, C, or combinations thereof" is intended to include at least one of: A, B, C, AB, AC, BC, or ABC and, if order is important in a particular context, also BA, CA, CB, CBA, BCA, ACB, BAC, or CAB. Continuing with this example, expressly included are combinations that contain repeats of one or more items or terms, such as BB, AAA, AAB, BBC, AAABCCCC, CBBAAA, CABABB, and so forth. The skilled artisan will understand that typically there is no limit on the number of items or terms in any combination, unless otherwise apparent from the context.

As used herein, the term "substantially" means that the subsequently described circumstance completely occurs or that the subsequently described circumstance occurs to a great extent or degree.

The term "copolymer" as used herein will be understood to encompass a polymer produced from two or more different types of monomers. As such, the term "copolymer" may refer to a polymer produced from two different types of monomers, a polymer produced from three different types of monomers, and/or a polymer produced from four or more different types of monomers.

The term "multi-epoxy" as used herein will be understood to encompass compounds and/or compositions having more than one epoxide group. As such, the term "multi-epoxy" may refer to, for example but without limitation, a diepoxy, tri-epoxy, and/or tetra-epoxy. It also will be understood that the term "epoxy" as used herein is defined as normally used in the art to mean an "epoxide functional group."

Additionally, the term "particle" as used herein will be understood to encompass both a particle in the solid state in dry conditions and/or a particle in a solvent or aqueous based dispersion.

The term "d50", as used with regard to particle size, will be understood to be interchangeable with the term "dv50", which represents the median value of a volume distribution of particle sizes. Therefore, the term "d50" as used herein means the median particle size of a plurality of particles having a volume distribution as measured by laser diffraction.

It will also be understood that the term "lithium ion battery" as used herein, and as well known in the art, encompasses rechargeable or "secondary" lithium ion batteries.

As used herein, a "treated separator" is a separator that has been pre-treated. Non-limiting examples of methods of pre-treating a separator to form a treated separator include: subjecting the separator to at least one of corona treatment, atmospheric plasma treatment, flame plasma treatment, chemical plasma treatment, ozone treatment, treatment with PVDF and/or PVDF copolymers, treatment with polydopamine, and/or any other methods of pre-treating the separator as would be known by persons of ordinary skill in the art.

Turning now to the present disclosure, certain embodiments thereof are directed to a ceramic binder composition comprising at least one ceramic particle and a binder comprising a polymer at least partially crosslinked with a crosslinking agent.

The polymer may be a functionalized polyvinylpyrrolidone copolymer. In particular, the polymer may be a copolymer produced from monomers comprising vinylpyrrolidone and at least one monomer having a functionality selected from the group consisting of an amine, an epoxide, and combinations thereof.

In one embodiment of the present invention, the polymer is a copolymer produced from monomers comprising vinylpyrrolidone and at least one monomer having at least one amine functional group, namely (a) a copolymer produced from monomers comprising vinylpyrrolidone and dimethylaminoethyl methacrylate (DMAEMA); (b) a copolymer produced from monomers comprising vinylpyrrolidone, vinylcaprolactam, and DMAEMA; (c) a copolymer produced from monomers comprising vinylpyrrolidone, vinylcaprolactam, and dimethylaminopropyl methacrylamide (DMAPMA); and/or (d) combinations thereof.

The copolymer produced from monomers comprising vinylpyrrolidone and DMAEMA may have the vinylpyrrolidone and DMAEMA present therein at a ratio of from about 75:25 to about 99:1, or from about 80:20 to about 99:5, or from about 85:15 to about 98:2, or from about 92:8 to about 98:2 of vinylpyrrolidone to DMAEMA. The copolymer produced from monomers comprising vinylpyrrolidone, vinylcaprolactam, and DMAEMA may have the vinylpyrrolidone, vinylcaprolactam, and DMAEMA present therein at a molar ratio in the range of from about 50:25:25 to about 99:0.1:0.9, respectively. The copolymer produced from monomers comprising vinylpyrrolidone, vinylcaprolactam, and DMAPMA may have the vinylpyrrolidone, vinylcaprolactam, and DMAPMA present therein at a molar ratio in the range of from about 50:25:25 to about 99:0.1:0.9, respectively.

In one embodiment, when the polymer is a copolymer produced from monomers comprising vinylpyrrolidone and at least one monomer having at least one amine functional group (as described above), the crosslinking agent is a compound comprising at least two epoxide groups. In one embodiment, the compound comprising at least two epoxide groups is a water dispersible multi-epoxy resin. The water dispersible multi-epoxy resin can be, for example but without limitation, bisphenol A diepoxy, a novolac epoxy resin, an epoxidized sorbitol resin, and/or combinations thereof. The compound comprising at least two epoxide groups may (alternatively or additionally) be at least one of a water dispersible polyglycidyl ether, a compound comprising at least two glycidyl (meth)acrylate moieties, and/or combinations thereof. The water dispersible polyglycidyl ether may be selected from the group consisting of sorbitol polyglycidyl ether, diglycerol polyglycidyl ether, glycerol polyglycidyl ether, trimethylolpropane polyglycidyl ether, and/or combinations thereof. Additionally, in one non-limiting embodiment, the compound comprising at least two glycidyl methacrylate moieties may be a copolymer produced from monomers comprising (i) vinylpyrrolidone and (ii) glycidyl (meth)acrylate.

The polymer and crosslinking agent may be present in the binder at a weight ratio in a range of from about 99:1 to about 50:50, or from about 98:2 to about 60:40, or from about 95:5 to about 70:30 of the polymer to the crosslinking agent when the polymer is an amine functionalized copolymer produced from monomers comprising vinylpyrrolidone and at least one monomer having at least one amine functional group, and the crosslinking agent is a compound comprising at least two epoxide groups as described above.

In another embodiment of the present invention, the polymer is a copolymer produced from monomers comprising vinylpyrrolidone and at least one monomer having at least one epoxide functional group, namely (e) a copolymer produced from monomers comprising vinylpyrrolidone and glycidyl methacrylate. The copolymer produced from monomers comprising vinylpyrrolidone and glycidyl methacrylate may have the vinylpyrrolidone and glycidyl methacrylate present therein at a molar ratio in the range of from about 75:25 to about 99:1, or from about 80:20 to about 99:5, or from about 85:15 to about 98:2, or from about 92:8 to about 98:2 of vinylpyrrolidone to glycidyl methacrylate.

When the polymer is a copolymer produced from monomers comprising vinylpyrrolidone and at least one monomer having at least one epoxide functional group (as described above), the crosslinking agent can be at least one of a water dispersible polyamine and a polycarboxylic acid.

In one embodiment, the water dispersible polyamine can be selected from the group consisting a copolymer produced from monomers comprising vinylpyrrolidone and dimethylaminopropyl methacrylamide (DMAPMA), a copolymer produced from monomers comprising vinylpyrrolidone and dimethylaminoethyl methacrylate (DMAEMA), a copolymer produced from monomers comprising vinylpyrrolidone, vinylcaprolactam, and DMAEMA, a copolymer produced from monomers comprising vinylpyrrolidone, vinylcaprolactam, and DMAPMA, diethylenetriamine, tetraethylenepentamine, triethylenetetramine, EPIKURE™ 6870-W-53 (an amine adduct dispersion available from Momentive Specialty Chemicals, Columbus, OH), and combinations thereof.

In one embodiment, the polycarboxylic acid can be selected from the group comprising citric acid, adipic acid, polyacrylic acid, and/or combinations thereof. Additionally, the polycarboxylic acid can be in any form as would be known in the field, e.g., as a small molecule, monomer, and/or in the polymeric form, that is capable of crosslinking with the at least one or more epoxide functional groups of the polymer. Additionally, as would be known to a person skilled in the art and as used herein, the term "polycarboxylic acid" is defined to mean a composition comprising at least two or more carboxyl groups.

The polymer and crosslinking agent may be present in the binder at a weight ratio in the range of from about 99:1 to about 50:50, or from about 98:2 to about 60:40, or from about 95:5 to about 70:30 of the polymer to the crosslinking agent when the polymer is an epoxide functionalized copolymer produced from monomers comprising vinylpyrrolidone and at least one monomer having at least one epoxide functional group, and the crosslinking agent is at least one of a water dispersible modified polyamine and/or a polycarboxylic acid.

In one embodiment, when the polymer is a copolymer produced from monomers comprising vinylpyrrolidone and at least one monomer having at least one epoxide functional group, the polymer further comprises a catalyst. The catalyst can be, for example but without limitation, selected from the group consisting of imidazole, imidazole derivatives, and/or any other catalyst as would be known in the field for catalyzing the crosslinking between the polymer and the crosslinking agent. In one embodiment, the catalyst is imidazole.

The at least one ceramic particle can be inorganic or organic. In one embodiment, the at least one ceramic particle comprises inorganic particles selected from the group consisting of alumina, alumina oxide hydroxide, SiO₂, BaSO₄, TiO₂, SnO₂, CeO₂, ZrO₂, BaTiO₃, Y₂O₃, B₂O₃, and/or combinations thereof. In one embodiment, the at least one ceramic particle may be at least one of alumina and/or alumina oxide hydroxide. In one embodiment, the alumina oxide hydroxide is Boehmite. In one embodiment, the at least one ceramic particle is in powder form. The at least one ceramic particle may have a particle size distribution wherein the d50 value is in a range of from about 0.01 to about 50 µm, or from about 0.05 to about 40 µm, or from about 0.1 to about 30 µm, or from about 0.1 to about 10 µm, or from about 0.2 to about 10 µm, or from about 0.01 to about 5 µm, or from about 0.05 to about 5 µm, or from about 0.1 to about 5 µm, or from about 0.2 to about 5 µm, or from about 1 to about 5 µm, or from about 1.5 to about 4 µm, or from about 1.6 to about 3 µm, as measured by laser diffraction.

In one embodiment, the weight ratio of the at least one ceramic particle to the binder is from 1:99 to 99:1. The at least one ceramic particle is present in the ceramic binder composition in a range of from about 50 to about 99 wt%, or from about 60 to about 99 wt%, or from about 70 to about 99 wt%, or from about 80 to about 99 wt%, or from about 90 to about 98 wt%, or from about 90 to about 97 wt%; and the binder is present in the ceramic binder composition in a range of from about 1 to about 50 wt%, or from about 1 to about 40 wt%, or from 1 to about 30 wt%, or from about 1 to about 20 wt%, or from about 1 to about 10 wt%, or from about 3 to about 10 wt%.

In yet another embodiment, the ceramic binder composition further comprises a surfactant. The surfactant can be selected from the group consisting of (a) an acetylenic diol type surfactant, (b) an N-alkyl-pyrrolidone, wherein the alkyl group is in a range from C1 to C10, (c) an alkyl polyethylene glycol ether produced from the reaction of a C1 to C18-Guerbet alcohol and ethylene oxide, and (d) combinations thereof.

In one non-limiting embodiment, the surfactant is an acetylenic diol type surfactant as described in, for example but without limitation, US Patent Nos. 6,641,986 and 6,313,182. In one embodiment, the surfactant is an acetylenic diol type surfactant represented by at least one of formula (I) and formula (II): 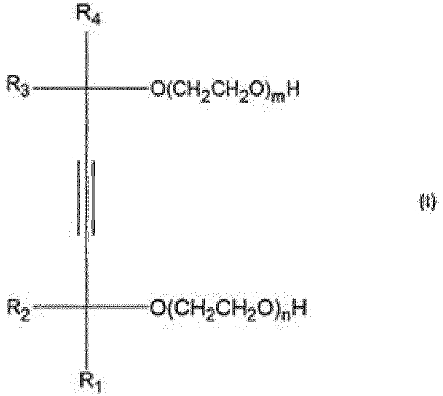 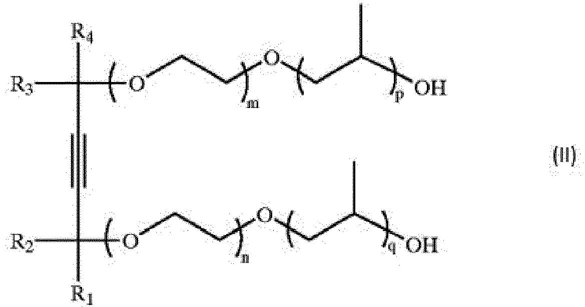 Wherein R₁ and R₄ are straight or branched alkyl chains having from 1 to 4 carbon atoms; R₂ and R₃ are H, methyl, or ethyl groups; (m + n) is in a range of from 0 to 40, or from 1 to 40, or from 2 to 40, or from 2 to 15 or from 2 to 10, or from 2 to 5; and (p + q) is in a range from 0 to 20, or from 1 to 20, or from 1 to 10, or from 1 to 5, or from 1 to 2.

In one embodiment, the surfactant is the acetylenic diol type surfactant represented by formula (I), wherein R₁ and R₄ are isobutyl groups, and R₂ and R₃ are methyl groups as represented by formula (III) below: 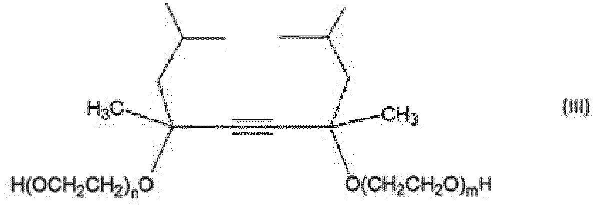 Wherein (m + n) is in a range from 0 to 40, or from 1 to 40, or from 2 to 40, or from 2 to 15, or from 2 to 10, or from 2 to 5. A non-limiting example of the surfactant illustrated in formula (III) is a 3.5 mole ethoxylate of 2,4,7,9-tetramethyl-5-decyne-4,7-diol, commercially available as Surfynol® 440 from Air Products and Chemicals, Inc. (Allentown, PA).

In one embodiment, the surfactant comprises the acetylenic diol type surfactant represented by formula (I), wherein R₁ and R₄ are isobutyl groups, R₂ and R₃ are methyl groups, and (m+n) is in a range of from 2 to 40.

In another embodiment, the surfactant is N-alkyl-pyrrolidone, wherein the alkyl group is in a range of from C1 to C10. In one non-limiting example, the N-alkyl-pyrrolidone can be 1-octylpyrrolidin-2-one, which is commercially available as Surfadone⁽™⁾ LP-100 from Ashland Specialty Ingredients (Wilmington, DE).

In yet another embodiment, the surfactant is an alkyl polyethylene glycol ether produced from the reaction of a C1 to C18-Guerbet alcohol and ethylene oxide, or a C5 to C12-Guerbet alcohol and ethylene oxide, or a C10-Guerbet alcohol and ethylene oxide. In one embodiment, the surfactant is an alkyl polyethylene glycol ether produced from the reaction of a C10-Guebert alcohol and ethylene oxide commercially available as Lutensol® XL-70 from BASF (Ludwigshafen am Rhein, Germany).

The ceramic binder composition can, in one non-limiting embodiment, further comprise an additive chosen from the group comprising rheology modifiers, dispersants, and/or combinations thereof.

Additionally, the present disclosure is directed to a ceramic slurry composition comprising at least one ceramic particle (as described in any one of the embodiments above), a polymer comprising a copolymer (a) to (e) (as described in any one of the embodiments above), a crosslinking agent (as described in any one of the embodiments above), and a solvent.

The solvent may comprise, for example but without limitation, water, ethanol, and/or N-methylpyrrolidone. In one embodiment, the solvent comprises water. Additionally, the solvent may be any solvent as would be known to a person skilled in the art capable of forming a stable ceramic slurry composition as presently disclosed.

The ceramic slurry composition may comprise: the at least one ceramic particle at a range of from about 1 to about 50 wt%, or from about 1 to about 45 wt%, or from about 2 to about 40 wt%, or from about 3 to about 35 wt%, or from about 5 to about 30 wt% of the ceramic slurry composition; the polymer at a range of from about 1 to about 40 w%, or from about 1.5 to about 40 wt%, or from about 2 to about 35 wt%, or from about 3 to about 30 wt%, or from about 4 to about 25 wt%, or from about 5 to about 20 wt% of the ceramic slurry composition; the crosslinking agent at a range of from about 0.01 to about 20 wt%, or from about 0.05 to about 15 wt%, or from about 0.1 to about 10 wt%, or from about 0.5 to about 5 wt% of the ceramic slurry composition; and/or the solvent at a range of from about 25 to about 99 wt%, or from about 30 to about 95 wt%, or from about 40 to about 95 wt%, or from about 50 to about 90 wt% of the ceramic slurry composition.

In one embodiment, the ceramic slurry composition further comprises a catalyst such as, for example but without limitation, imidazole, an imidazole derivative, and/or combinations thereof. The catalyst, in one embodiment, comprises imidazole. The catalyst may be present in the ceramic slurry composition in a range of from about 0.01 to about 5 wt%, or from about 0.05 to about 2 wt%, or from about 0.05 to about 1 wt%, or from about 0.1 to about 0.5 wt% of the ceramic slurry composition.

In one embodiment, the ceramic slurry composition further comprises a surfactant (as described above). The surfactant may be present in the ceramic slurry composition in a range from about 0.0075 to about 1 wt% of the composition, or from about 0.01 to about 1 wt% of the compositions, or from about 0.01 to about 0.5 wt% of the composition, or from about 0.01 to about 0.1 wt% of the composition.

The ceramic slurry composition may have a viscosity in the range of form about 0.05 to about 5 Pa·s, or from about 0.075 to about 2.5 Pa·s, or from about 0.1 to about 1 Pa·s at a shear rate of 20 rpms at 25 °C. Additionally, the ceramic slurry composition may have stability such that the at least one ceramic particle, polymer, and/or crosslinking agent visibly stay in suspension for at least 3 days, or for at least 4 days, or for at least 5 days.

The present invention may be used for a ceramic coated separator for an electrochemical cell, wherein the electrochemical cell may be, for example but without limitation, a lithium ion battery. The ceramic coated separator comprises a separator and the above-described ceramic binder composition, wherein the ceramic binder composition is in contact with at least a portion of the separator. In one embodiment, the ceramic coated separator comprises a separator that has been coated with the above-described ceramic binder composition on at least one side of the separator. In another embodiment, the ceramic coated separator comprises a separator that has been coated with the above-described ceramic binder composition on two sides of the separator. In any of the above-described embodiments of the ceramic coated separator, the above-described ceramic binder composition may be coated on the separator such that the coating is uniformly distributed on at least one side of the separator. The coating, in one embodiment, has a mean thickness in a range of from about 1 to about 15 µm, or from about 1 to about 10 µm, or from about 1 to about 5 µm. In one embodiment, the coating has a mean thickness of about 4 to about 5 µm.

The separator may be, for example but without limitation, a porous, macroporous, and/or microporous membrane or film. In one embodiment, the separator is a polyolefin membrane. The separator may comprise a single layer or multiple layers of, for example but without limitation, a polyolefin membrane. The polyolefin separator, in one embodiment, may be microporous. The polyolefin may be, for example but without limitation, comprised of polyethylene, polypropylene, polymethyl pentene, and/or combinations thereof. The polyolefin separator may have a thickness in the range of from about 1 to about 100 µm, or from about 3 to about 50 µm, or from about 4 to about 40 µm, or from about 5 to about 30 µm, or from about 10 to about 25 µm.

In one embodiment, the separator has been pre-treated to improve the wetting of the ceramic coating composition onto the separator. Non-limiting examples of methods of pre-treating the separator include subjecting the separator to at least one of corona treatment, atmospheric plasma treatment, flame plasma treatment, chemical plasma treatment, ozone treatment, treatment with PVDF and/or PVDF copolymers, and treatment with polydopamine.

In another embodiment, the separator has not been pre-treated. It has been hereby determined that, as described in more detail herein, adding a surfactant to the ceramic slurry composition improves the wetting onto an untreated separator and the adhesion of the resulting film thereon without negatively impacting the electrochemical properties of the ceramic coated separator.

The ceramic coated separator for an electrochemical cell may be made by a method, wherein the electrochemical cell may be, for example but without limitation, a lithium ion battery. In one embodiment, the method of making the ceramic coated separator as disclosed herein comprises: (a) applying a ceramic slurry composition comprising: at least one ceramic particle, a polymer comprising a copolymer produced from monomers comprising (i) vinylpyrrolidone and (ii) at least one monomer having a functionality selected from the group consisting of an amine, an epoxide, and/or combinations thereof, a crosslinking agent, a solvent, and, optionally, a surfactant (all as described in one or more of the above embodiments) to at least one side of a separator (as described above) to form a coated separator comprising a slurry layer on the separator, and (b) drying the slurry layer on the coated separator to form a ceramic coating on the separator (i.e., a "ceramic coated separator"), wherein the ceramic coating comprises the at least one ceramic particle, a binder comprising the polymer at least partially crosslinked with the crosslinking agent, and, optionally, the surfactant.

In one embodiment, the step of drying the slurry layer to form the ceramic coating on the separator comprises heating the coated separator to a temperature in a range of from room temperature (i.e., for example, but without limitation, from about 20 to about 25 °C) to about 60 °C, or from room temperature to about 80 °C, or from room temperature to about 90 °C, or from room temperature to about 100 °C, or from room temperature to about 120 °C, or from room temperature to about 130 °C, or from room temperature to about 135°C, or from about 50°C to about 80°C, or from about 60 °C to about 80 °C for a time in a range of from about 10 seconds to about 60 minutes, or from about 20 seconds to about 30 minutes, or from about 10 seconds to about 20 minutes, or from about 20 seconds to about 10 minutes, or from about 1 minute to about 10 minutes.

In another embodiment, the slurry layer on the separator is further conditioned at a temperature of up to about 100 °C for up to about 24 hours, or up to about 12 hours, or up to about 6 hours, or up to about 3 hours, or up to about 2 hours, or up to about 1 hour. In yet another embodiment, the step of drying the slurry layer for any of the aforementioned embodiments comprises conditioning the slurry layer at a temperature in a range of from about 60 °C to about 80 °C for about 30 minutes, or for about 20 minutes, or for about 10 minutes, or for about 5 minutes.

The methods for applying the ceramic slurry composition to the separator may include any conventional coating manner as would be known to a person skilled in the field such as, for example but without limitation, dip coating, gravure coating, spray coating, electrospin and/or electrospun coating, myer rod dip coating, slot die and/or extrusion coating, sputtering, vapor deposition, sputtering chemical vapor deposition, and/or combinations thereof. The ceramic slurry composition can be applied to one or more sides of the separator. The thickness of the coated ceramic slurry composition after drying to form a ceramic coating may have a mean value in a range of from about 1 to about 15 µm, or from about 1 to about 10 µm, or from about 1 to about 5 µm. In one embodiment, the ceramic slurry composition is coated onto the separator two or more times until the desired thickness is achieved.

The above-described ceramic slurry composition may be made by a method comprising: combining the at least one ceramic particle, the polymer comprising a copolymer produced from monomers comprising (i) vinylpyrrolidone and (ii) at least one monomer having a functionality selected from the group consisting of an amine, an epoxide, and/or combinations thereof, the crosslinking agent, the solvent, optionally, a catalyst, and, optionally, a surfactant (all as described in one or more of the above embodiments) prior to applying the slurry to the separator.

The ceramic coated separator for an electrochemical cell may be made by a method which comprises: (a) combining at least one ceramic particle (as described above), a polymer comprising a copolymer produced from monomers comprising (i) vinylpyrrolidone and (ii) at least one monomer having a functionality selected from the group consisting of an amine, an epoxide, and/or combinations thereof (as described above), a crosslinking agent (as described above), a solvent (as described above), optionally, a catalyst (as described above), and, optionally, a surfactant (as described above), to form a ceramic slurry composition, (b) applying the ceramic slurry composition to at least one side of a separator (as described above) to form a coated separator comprising a slurry layer on the separator, and (c) drying the slurry layer on the coated separator to form a ceramic coating on the separator (i.e., a "ceramic coated separator"), wherein the ceramic coating comprises the at least one ceramic particle, a binder comprising the polymer at least partially crosslinked with the crosslinking agent, and, optionally, the catalyst and/or the surfactant.

The above-described ceramic coated separator may be used in, for example but without limitation, fuel cells, batteries, and/or capacitors.

Likewise, the ceramic coated separator may be used in a battery. In one embodiment, the battery may be a lithium ion battery.

The ceramic coated separator may be used in an electrochemical cell additionally comprising at least one cathode, and at least one anode. The electrochemical cell may further comprise at least one electrolyte. Additionally, the cathodes and anodes may be any suitable cathode and/or anode as would be known to a person of ordinary skill in the field. The electrolyte may be in the form of a gel and/or liquid.

### EXAMPLES

### Ceramic Slurry Compositions without Surfactant

Numerous comparative and experimental ceramic slurry compositions were prepared by adding ceramic powder (Dispal® 10F4 from Sasol®, Houston, TX), a polymer, and in some cases, a crosslinking agent, to either water or, in a few cases, water and acetone to form dispersions. These dispersions were mixed in a high shear mixer for 1 hour at 1500 rpm, and viscosities of the dispersions were directly measured by a Brookfield® viscometer LV, spindle #2 at 25 °C and 30 rpm. The amounts (and type where necessary) of each component are identified in Table 1. Specifically, the polymer and crosslinking agent(s) of the binder compositions for the slurries are identified in Table 1 by commercial name and/or composition. More detailed information regarding each polymer and crosslinking agent is provided in Table 1. Additionally, the comparative examples are delineated in Table 1 by the phrase "Comp." underneath the example number.

As used in Table 1 and below, "PVP" refers to polyvinylpyrrolidone, "VP" refers to vinylpyrrolidone, "PVDF" refers to polyvinylidene fluoride, "DMAPMA" refers to dimethylaminopropyl methacrylamide, "DMAEMA" refers to dimethylaminoethyl methacrylate, and "GMA" refers to glycidyl methacrylate.

Additionally, experimental copolymers were prepared at varying ratios including (i) copolymers produced from vinylpyrrolidone and glycidyl methacrylate, (ii) copolymers produced from vinylpyrrolidone and DMAPMA, and (iii) copolymers produced from vinylpyrrolidone and DMAEMA. These copolymers are identified in the table, and the procedures for forming such are provided in the paragraphs following Table 1, wherein the ratio in parenthesis indicates the ratio of vinylpyrrolidone to one of glycidyl methacrylate, DMAPMA, or DMAEMA.

**Table 1**

| **Example #** | **Binder Composition** | | **Ceramic (g)** | **Polymer (g)** | **Crosslinking Agent (g)** | **Water (g)** | **Acetone (g)** | **Viscosity (Pa·s)** |
|---|---|---|---|---|---|---|---|---|
| | **Polymer** | **Crosslinking Agent** | | | | | | |
| 1 (Comp.) | PVP K-120⁽¹⁾ | - | 43 | 4 | - | 199 | - | 0.580 |
| 2 (Comp.) | PVP K-120⁽¹⁾ | SB Latex⁽²⁾ | 43 | 1 | 4.17 | 110 | | 0.252 |
| 3 (Comp.) | Kynar® 2801⁽³⁾ | - | 21.5 | 7.215 | - | - | 230.9 | 0.360 |
| 4 (Comp.) | Kynar® 2801⁽³⁾ | - | 21.5 | 2.15 | - | - | 224.4 | 0.372 |
| 5 (Comp.) | ViviPrint™ 131⁽⁴⁾ | SB Latex⁽²⁾ | 43 | 21.5 | 0.69 | 357.9 | - | 0.288 |
| 6 (Comp.) | Styleze™ CC-10⁽⁵⁾ | - | 21.5 | 10.75 | - | 231.5 | - | 0.283 |
| 7 (Comp.) | Styleze™ CC-10⁽⁵⁾ | SB Latex⁽²⁾ | 21.5 | 10.75 | 0.56 | 236.5 | - | 0.283 |
| 8 (Comp.) | Copolymer produced from VP and GMA (95/5) | - | 21.5 | 2 | - | 68 | - | 0.260 |
| 9 (Comp.) | Copolymer produced from VP and GMA (98/2) | - | 21.5 | 2 | - | 78 | - | 0.024 |
| 10 (Comp.) | Copolymer produced from VP and GMA (92/8) | - | 21.5 | 2 | - | 83 | - | 0.324 |
| 11 (Comp.) | Copolymer produced from VP and DMAPMA (95/5) | - | 21.5 | 9.77 | - | 132.5 | - | 0.049 |
| 12 (Comp.) | Copolymer produced from VP and DMAPMA (90/10) | - | 21.5 | 8.27 | - | 134 | - | 0.119 |
| 13 (Comp.) | Copolymer produced from VP and DMAEMA (90/10) | - | 21.5 | 7.17 | - | 135.1 | - | 0.112 |
| 14 (Comp.) | Polyoxanorb orene⁽⁶⁾ | - | 21.5 | 8.95 | - | 133.3 | - | 0.077 |
| 15 (Comp.) | Plasdone™ S-630 copovidone⁽⁷⁾ | - | 21.5 | 1.08 | - | 141.2 | - | 0.001 |
| 16 (Comp.) | Plasdone™ S-630 copovidone⁽⁷⁾ | - | 21.5 | 1.08 | - | 50 | - | 0.049 |
| 17 (Comp.) | Hydrolyzed Plasdone™ S-630 copovidone⁽⁷⁾ | - | 21.5 | 1.08 | - | 55 | - | 0.303 |
| 18 (Comp.) | Plasdone™ S-630 copovidone⁽⁷⁾ | - | 32.25 | 1.6125 | - | 68 | - | 0.275 |
| 19 (Comp.) | Copolymer produced from VP and DMAEMA (90/10) | - | 21.5 | 7.17 | - | 110 | - | 0.288 |
| 20 (Comp.) | Copolymer produced from VP and GMA (92/8) | - | 21.5 | 2 | - | 78 | - | 0.296 |
| 21 | Copolymer 845⁽⁸⁾ | Denacol™ EX-614⁽⁹⁾ | 43 | 20 | 4 | 165 | - | 0.296 |
| 22 | Copolymer 845⁽⁸⁾ | Epi-Rez™ 6520-WH-53⁽¹⁰⁾ | 43 | 20 | 0.78 | 165 | - | 0.296 |
| 23 (Ref.) | ViviPrint™ 131⁽⁴⁾ | Epi-Rez™ 5003-W-55⁽¹¹⁾ | 43 | 21.5 | 0.61 | 357.1 | - | 0.288 |
| 24 (Ref.) | ViviPrint™ 131⁽⁴⁾ | Epi-Rez™ 6520-WH-53⁽¹⁰⁾ | 43 | 21.5 | 0.63 | 357.3 | - | 0.288 |
| 25 (Ref.) | Styleze™ CC-10⁽⁵⁾ | Denacol™ EX-614⁽⁹⁾ | 21.5 | 10.75 | 0.11 | 232.5 | - | 0.296 |
| 26 (Ref.) | Styleze™ CC-10⁽⁵⁾ | Epi-Rez™ 5003-W-55⁽¹¹⁾ | 21.5 | 10.75 | 0.2 | 233.3 | - | 0.280 |
| 27 (Ref.) | Styleze™ CC-10⁽⁵⁾ | Epi-Rez™ 6520-WH-53⁽¹⁰⁾ | 21.5 | 10.75 | 0.2 | 233.3 | - | 0.280 |
| 28 (Ref.) | Styleze™ CC-10⁽⁵⁾ | Denacol™ EX-614⁽⁹⁾ | 21.5 | 10.75 | 0.27 | 233.9 | - | 0.310 |
| 29 (Ref.) | Styleze™ CC-10⁽⁵⁾ | Epi-Rez™ 5003-W-55⁽¹¹⁾ | 21.5 | 10.75 | 0.49 | 235.9 | - | 0.330 |
| 30 (Ref.) | Styleze™ CC-10⁽⁵⁾ | Epi-Rez™ 6520-WH-53⁽¹⁰⁾ | 21.5 | 10.75 | 0.51 | 236.1 | - | 0.280 |
| 31 (Ref.) | Copolymer produced from VP and DMAPMA (95/5) | Epi-Rez™ 5003-W-55⁽¹¹⁾ | 21.5 | 9.77 | 0.49 | 79.4 | - | 0.288 |
| 32 (Ref.) | Copolymer produced from VP and DMAPMA (95/10) | Denacol™ EX-614⁽⁹⁾ | 21.5 | 8.27 | 0.27 | 102.4 | - | 0.310 |
| 33 (Ref.) | Copolymer produced from VP and GMA (95/5) | Styleze™ CC-10⁽⁵⁾ | 21.5 | 2 | 2 | 68 | - | 0.260 |
| 34 | Copolymer produced from VP and GMA (98/2) | Styleze™ CC-10⁽⁵⁾ | 21.5 | 2 | 2 | 78 | - | 0.320 |
| 35 | Copolymer produced from VP and GMA (90/10) | Styleze™ CC-10⁽⁵⁾ | 21.5 | 2 | 2 | 83 | - | 0.324 |
| 36 | Copolymer produced from VP and GMA (90/10) | Epikure™ 6870-W-53⁽¹²⁾ | 21.5 | 2 | 0.38 | 48 | - | 0.265 |

| | | | | | | | | |
|---|---|---|---|---|---|---|---|---|
| Comp. = Comparative Example, not in accordance with the claimed invention Ref. = Reference Example, not in accordance with the claimed invention (1) PVP K-120: Polyvinylpyrrolidone commercially available from Ashland, Inc. (Wilmington, DE). (2) AL 3001 Styrene Butadiene Latex commercially available from Nippon A&L (Japan). For Example numbers 5 and 7, the SB Latex was diluted to 4.8% active to assist in mixing, wherein the excess water used for dilution is reflected in the column labeled "Water (g)". (3) Kynar® 2801: PVDF-HFP copolymer commercially available from Arkema, Inc. (King of Prussia, PA). (4) ViviPrint™ 131: a copolymer produced from vinylpyrrolidone and DMAPMA commercially available from Ashland, Inc. (Wilmington, DE). (5) Styleze™ CC-10: a copolymer produced from vinylpyrrolidone and DMAPMA commercially available from Ashland, Inc. (Wilmington, DE). (6) Polyoxanorborene: produced as described in US Patent No. 8,283,410. (7) Plasdone™ S-630: copolymer produced from vinylpyrrolidone and vinyl acetate commercially available from Ashland, Inc. (Wilmington, DE). (8) Copolymer 845: a copolymer produced from vinylpyrrolidone and DMAEMA commercially available from Ashland, Inc. (Wilmington, DE). (9) Denacol™ EX-614: multifunctional epoxy compound commercially available from Nagase America (NY, NY). For Example numbers 25 and 28, the Denacol™ EX-614 was diluted to 1% active to assist in mixing, wherein the excess water used for dilution is reflected in the column labeled "Water (g)". (10) Epi-Rez™ 6520-WH-53: dispersion of bisphenol A diepoxy in water commercially available from Momentive Specialty Chemicals, Inc. (Columbus, OH). For Example numbers 24, 27, and 30, the Epi-Rez™ 6520-WH-53 was diluted to 5.3% actives to assist in mixing, wherein the excess water used for dilution is reflected in the column labeled "Water (g)". (11) Epi-Rez™ 5003-W-55: a nonionic aqueous dispersion of polyfunctional aromatic epoxy resin with an average functionality of three, commercially available from Momentive Specialty Chemicals Inc. (Columbus, OH). For Example numbers 23, 26, 29, and 31, the Epi-Rez™ 5003-W-55 was diluted to 5.5% actives to assist in mixing, wherein the excess water used for dilution is reflected in the column labeled "Water (g)". (12) Epikure™ 6870-W-53: non-ionic aqueous dispersion of a modified polyamine adduct curing agent commercially available from Momentive Specialty Chemicals Inc. | | | | | | | | |

### Copolymer Produced From Vinylpyrrolidone and Glycidyl Methacrylate (98/2)

The copolymer produced from vinylpyrrolidone and glycidyl methacrylate (98/2) was produced by charging 680 g cyclohexane and 11.76 g N-vinylpyrrolidone to a 1 L resin kettle equipped with an anchor agitator, thermocouple, gas inlet, and reflux condenser. The reaction mixture was purged with nitrogen for 30 minutes. With agitation and nitrogen purging, the reactor was heated to 65 °C, then two feeds of 105.84 g N-vinylpyrrolidone and 2.4 g glycidyl methacrylate were fed. The N-vinylpyrrolidone was fed over a period of four hours and glycidyl methacrylate was fed over five hours. Additionally, 0.25 g Trigonox® 25 C75 (a copolymerization initiator available from AkzoNobel, Amersfoort, Netherlands) was charged. After two hours of reacting, an additional 0.25 g Trigonox® 25 C75 was charged into the reactor. The reaction was held for 2 hours then an additional 0.25 g Trigonox® 25 C75 was charged into the reactor. At 6, 10, and 12 hours of reacting, 0.4 g Trigonox® 25 C75 was charged into the reactor respectively. After 14 hours of reacting, the reaction mixture was cooled to room temperature to discharge the product. Gas chromatography analysis showed the residual N-vinylpyrrolidone and glycidyl methacrylate were less than 3000 ppm and the resultant copolymer had a weight average molecular weight of about 141,000 Daltons.

### Copolymer Produced From Vinylpyrrolidone and Glycidyl Methacrylate (95/5)

The copolymer produced from vinylpyrrolidone and glycidyl methacrylate (95/5) was produced by charging 680 g cyclohexane and 11.40 g N-vinylpyrrolidone to a 1 L resin kettle equipped with an anchor agitator, thermocouple, gas inlet, and reflux condenser. The reaction mixture was purged with nitrogen for 30 minutes. With agitation and nitrogen purging, the reactor was heated to 65 °C, then two feeds of 105.84 g N-vinylpyrrolidone and 6 g glycidyl methacrylate were fed. The N-vinylpyrrolidone was fed over a period of four hours and glycidyl methacrylate was fed over five hours. Additionally, 0.25 g Trigonox® 25 C75 (a copolymerization initiator available from AkzoNobel, Amersfoort, Netherlands) was charged. After two hours of reacting, an additional 0.25 g Trigonox® 25 C75 was charged into the reactor. The reaction was held for 2 hours then an additional 0.25 g Trigonox® 25 C75 was charged into the reactor. At 6, 10, and 12 hours of reacting, 0.4 g Trigonox® 25 C75 was charged into the reactor respectively. After 14 hours of reacting, the reaction mixture was cooled to room temperature to discharge the product. Gas chromatography analysis showed the residual N-vinylpyrrolidone and glycidyl methacrylate were less than 3000 ppm and the resultant copolymer had a weight average molecular weight of about 180,000 Daltons.

### Copolymer Produced From Vinylpyrrolidone and Glycidyl Methacrylate (92/8)

The copolymer produced from vinylpyrrolidone and glycidyl methacrylate (92/8) was produced by charging 680 g cyclohexane and 11.04 g N-vinylpyrrolidone to a 1 L resin kettle equipped with an anchor agitator, thermocouple, gas inlet, and reflux condenser. The reaction mixture was purged with nitrogen for 30 minutes. With agitation and nitrogen purging, the reactor was heated to 65 °C, then two feeds of 105.84 g N-vinylpyrrolidone and 9.6 g glycidyl methacrylate were fed. The N-vinylpyrrolidone was fed over a period of four hours and glycidyl methacrylate was fed over five hours. Additionally, 0.25 g Trigonox® 25 C75 (a copolymerization initiator available from AkzoNobel, Amersfoort, Netherlands) was charged. After two hours of reacting, an additional 0.25 g Trigonox® 25 C75 was charged into the reactor. The reaction was held for 2 hours then an additional 0.25 g Trigonox® 25 C75 was charged into the reactor. At 6, 10, and 12 hours of reacting, 0.4 g Trigonox® 25 C75 was charged into the reactor respectively. After 14 hours of reacting, the reaction mixture was cooled to room temperature to discharge the product. Gas chromatography analysis showed the residual N-vinylpyrrolidone and glycidyl methacrylate were less than 3000 ppm.

### Copolymer Produced From Vinylpyrrolidone and Glycidyl Methacrylate (90/10)

The copolymer produced from vinylpyrrolidone and glycidyl methacrylate (90/10) was produced by charging 680 g cyclohexane and 10.80 g N-vinylpyrrolidone to a 1 L resin kettle equipped with an anchor agitator, thermocouple, gas inlet, and reflux condenser. The reaction mixture was purged with nitrogen for 30 minutes. With agitation and nitrogen purging, the reactor was heated to 65 °C, then two feeds of 105.84 g N-vinylpyrrolidone and 12 g glycidyl methacrylate were fed. The N-vinylpyrrolidone was fed over a period of four hours and glycidyl methacrylate was fed over five hours. Additionally, 0.25 g Trigonox® 25 C75 (a copolymerization initiator available from AkzoNobel, Amersfoort, Netherlands) was charged. After two hours of reacting, an additional 0.25 g Trigonox® 25 C75 was charged into the reactor. The reaction was held for 2 hours then an additional 0.25 g Trigonox® 25 C75 was charged into the reactor. At 6, 10, and 12 hours of reacting, 0.4 g Trigonox® 25 C75 was charged into the reactor respectively. After 14 hours of reacting, the reaction mixture was cooled to room temperature to discharge the product. Gas chromatography analysis showed the residual N-vinylpyrrolidone and glycidyl methacrylate were less than 3000 ppm and the resultant copolymer had a weight average molecular weight of about 166,000 Daltons.

### Copolymer Produced From Vinylpyrrolidone and DMAPMA (95/5) and (90/10)

The copolymer produced from vinylpyrrolidone and DMAPMA at both (95/5) and (90/10) ratios were produced using the process disclosed in US Patent No. 6,620,521.

### Copolymer Produced From Vinylpyrrolidone and DMAEMA (90/10)

The copolymer produced from vinylpyrrolidone and DMAEMA was produced in a 1-L resin kettle (i.e., the "reactor") equipped with an anchor agitator, thermocouple, gas inlet and reflux condenser, and 300 g of water. The reaction mixture was purged with nitrogen for 30 min. With agitation and nitrogen purging, the reactor was heated to 65 °C, then a feed of 35 g N-vinylpyrrolidone and 3.85 DMAEMA was fed over a period of three hours and 0.1g Trigonox® 25 C75 (a copolymerization initiator available from AkzoNobel, Amersfoort, Netherlands) was also charged to the reactor. At 1, 2, 3, 5, and 7 hours after adding N-vinylpyrrolidone and DMAPMA to the reactor, a charge of 0.1 g Trigonox® 25 C75 was added into the reactor, respectively. After the last charge of Trigonox® 25 C75, the reaction was held steady for two hours. The reaction mixture was cooled to room temperature to discharge the product. Gas chromatography analysis showed the residual N-vinylpyrrolidone and DMAEMA were less than 1000 ppm and the resultant copolymer had a weight average molecular weight of 128,000 Daltons.

### Binder Composition

In order to test the electrolyte resistance properties of the binder compositions without ceramic particles present therein, additional compositions were prepared similarly to those in Table 1 absent ceramic particles, which were then cast on aluminum foil and heated at 60 °C for 60 minutes to form binder compositions in the form of films having thicknesses of about 1 mm. The binder compositions were then evaluated to determine their electrolyte resistance.

### Electrolyte Resistance Test

The electrolyte resistance of the binder compositions was determined by contacting the above-described binder composition films with EC/DEC/DMC (ethyl carbonate/diethyl carbonate/dimethyl carbonate) electrolyte for 3 days in bottles at 60 °C and then evaluating whether or not the binder compositions were either soluble or insoluble in the electrolyte. The percent solubility for the binder compositions was determined by (i) measuring the thickness of the binder composition films prior to being contacted with the electrolyte, (ii) measuring the thickness of the binder composition films remaining after being contacted with the electrolyte for 3 days, and (iii) calculating the amount of the binder composition that was soluble - i.e., no longer in the form of the binder composition film. The binder compositions were evaluated as to whether they fell into one of three categories: 100% soluble, less than 50% soluble, or less than 20% soluble. Of course, less than 20% soluble is ideal and is considered to have an adequate electrolyte resistance.

**Table 2**

| **Example # of Ceramic Slurry Used to Form Ceramic Binder Composition** | **Electrolyte Resistance** |
|---|---|
| | **X = 100% soluble** |
| | **Δ = < 50% soluble** |
| | **○ = < 20% soluble** |
| 1 | X |
| 2 | Δ |
| 3 | ○ |
| 4 | ○ |
| 5 | ○ |
| 6 | X |
| 7 | ○ |
| 8 | X |
| 9 | X |
| 10 | X |
| 11 | X |
| 12 | X |
| 13 | X |
| 14 | ○ |
| 15 | X |
| 16 | X |
| 17 | Δ |
| 18 | X |
| 19 | X |
| 20 | X |
| 21 | ○ |
| 22 | ○ |
| 23 | ○ |
| 24 | ○ |
| 25 | ○ |
| 26 | ○ |
| 27 | ○ |
| 28 | ○ |
| 29 | ○ |
| 30 | ○ |
| 31 | ○ |
| 32 | ○ |
| 33 | ○ |
| 34 | ○ |
| 35 | ○ |
| 36 | ○ |

### Ceramic Coated Separators

Additionally, as listed in Table 3, specific ceramic slurry compositions identified above were coated on a 10 - 15 µm plasma treated polyethylene separator at a thickness of about 2 µm using a wire-wrapped drawdown rod and were dried and conditioned at 60 °C for 1 hour. The dry thickness of each ceramic coating on the polyethylene separator was about 2 ± 0.5 microns. The ceramic slurry compositions that were coated had both good electrolyte resistance and rheology measurements. The thickness of the various features and/or embodiments herein was measured in micrometers using a Scanning Electron Microscope.

The ceramic coated separators were subjected to one or more of the following test methods, the results of which are presented in Table 3 below. The ceramic slurry compositions that were soluble in the electrolyte, as described further below, generally were not subjected to further testing.

### Gurley Porosity Test

Gurley porosity measurements of the ceramic coated separators were measured using a Gurley densometer from TMI Machine, Inc. (New Castle, DE). Results are presented as a percentage, wherein a blank separator had a Gurley porosity measurement of 100% and the results for the examples are normalized in percentages versus the amount of time for an amount of air to get through the separator. An ideal Gurley porosity measurement for a ceramic coated separator is less than 130% as compared to the blank polyethylene separator which is 100%.

### Thermal Shrinkage after Heat Treatment at 140 °C for 1 Hour

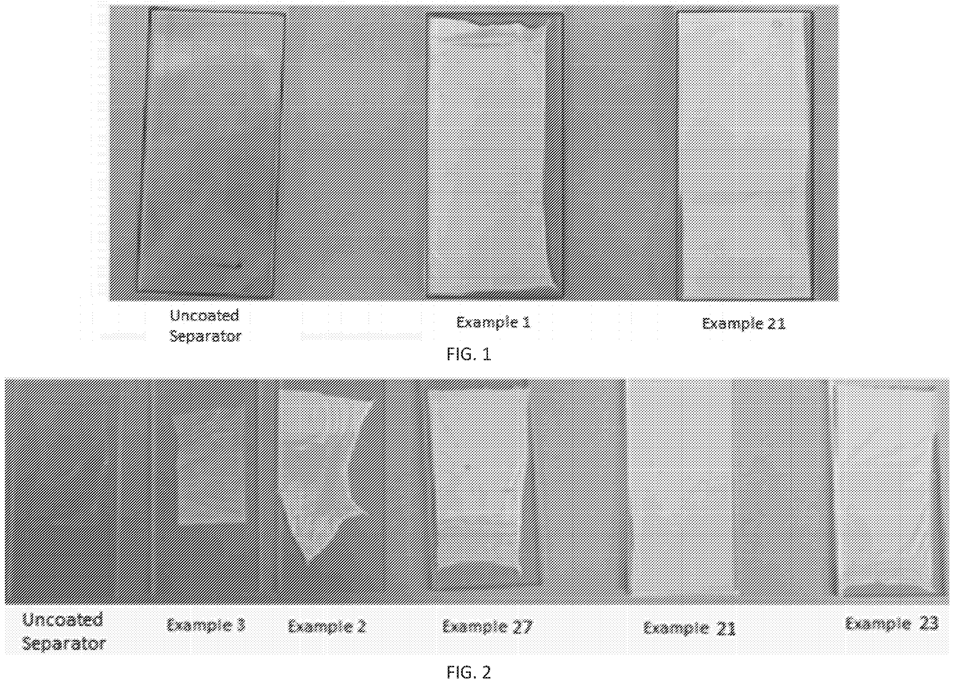

The ceramic coated separators were also heat treated at 140 °C for 1 hour to evaluate how much the ceramic coated separator will shrink under higher temperature conditions. As known to a person of ordinary skill in the field, shrinkage of the separator may result in electrical short circuits, thereby causing the battery to fail and potentially cause safety hazards. For shrinkage, the lower the number, the better the results. The quantitative data, where available, for most of the exemplary ceramic coated separators is presented in Table 3. FIGS. 1-3 illustrate the shrinkage from a qualitative perspective for ceramic coated separators produced using the ceramic slurries described in Examples 1-3, 7, 21, 23, and 27-30 as well as the uncoated polyolefin separator.

In more detail, the thermal shrinkage was determined by measuring the area of the separator or ceramic coated separator after heat treatment at 140 °C for 1 hour. The values in Table 3 reflect the amount of the separator or coated separator that shrunk during the heat treatment as compared to their initial areas. Less than 10% shrinkage is considered as very good.

**Table 3**

| **Example # of Ceramic Slurry Coated on Separator** | **Gurley Porosity (%)** | **Shrinkage at 140 °C for 1 hour in air convection oven (%)** |
|---|---|---|
| Reference - Blank Plasma Treated Separator | 100 | Melted |
| 1 | 150 | 12 |
| 2 | 129 | 46 |
| 3 | 138 | 68 |
| 4 | 162 | -- |
| 5 | 127 | -- |
| 7 | 114 | 71 |
| 17 | 130 | -- |
| 21 | 144 | 1 |
| 22 | 120 | 9 |
| 23 | 111 | 6 |
| 24 | 109 | 65 |
| 26 | 102 | 65 |
| 27 | 124 | 28 |
| 28 | 110 | 73 |
| 29 | 116 | 3 |
| 30 | 113 | 71 |
| 31 | 121 | -- |
| 32 | 128 | -- |
| 34 | 142 | 2 |

As demonstrated in Table 3, ceramic coated separators having a ceramic coating made of a copolymer produced from monomers comprising (i) vinylpyrrolidone and (ii) at least one monomer having an amine and/or epoxide functionality and a crosslinking agent overall had better electrolyte resistance, shrinkage resistance, and Gurley porosity properties/values than the comparative examples (Examples 1-5, 7, and 17) comprising either just polyvinylpyrrolidone or the copolymer produced from VP and at least one monomer having an amine and/or epoxide functionality but no crosslinking agent. In particular, Examples 21, 22 and 34 and Reference Examples 23 and 29 showed excellent shrinkage resistance.

### Half Coin Cells

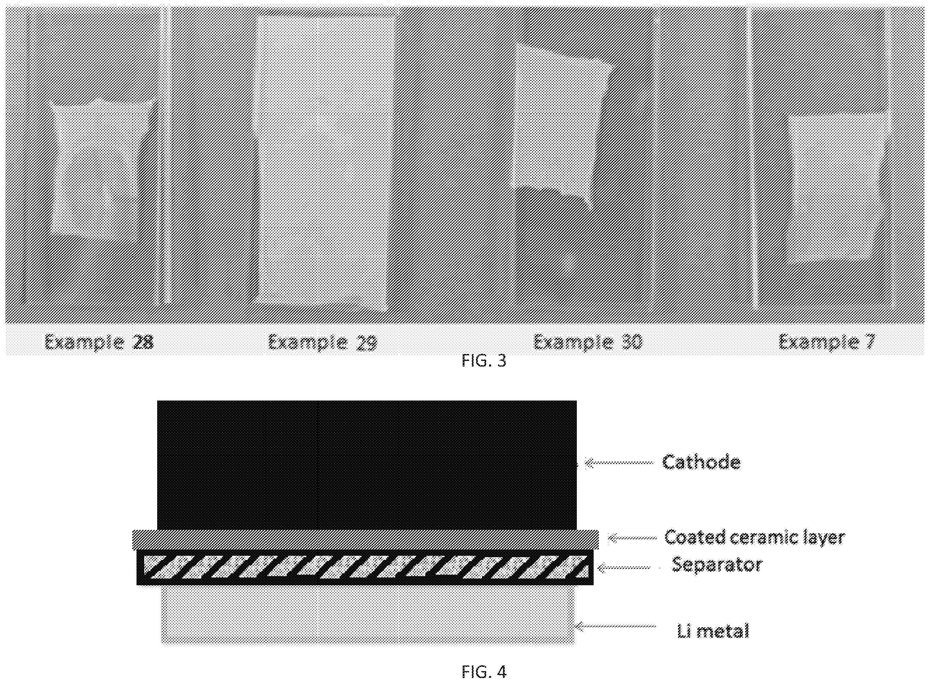

Six half coin cells were prepared using the above-described ceramic coated separators that were made using the ceramic slurry compositions of Comparative Examples 1 and 3 (as detailed above) and Example 21 and Reference Examples 23 and 29 (as detailed above), as well as a blank polyethylene separator having no coating thereon. The half coin cells had a 20 mm diameter and a 3.2 mm height (i.e., "CR-2032" half coin cells) and were produced using (i) a cathode comprising lithium cobalt oxide and a polyvinylidene fluoride binder, (ii) a lithium metal anode, (iii) 1M LiPF₆ in EC/DEC/DMC (1:1:1 volume%), as the electrolyte, and (iv) the above-described ceramic coated separators using the ceramic slurry compositions for Examples 1, 3, 21, 23, and 29, as well as an uncoated and plasma treated polyethylene separator. A generic illustration of the half coin cells for all but the uncoated polyethylene separator is provided in FIG. 4, wherein the ceramic coating on the polyethylene separator is only on the side of the separator facing the cathode due to the illustration only representing a half coin cell. FIG. 4, however, is merely a schematic and is not intended to be drawn to scale. The cathode and anode each had a thickness of 75 um (aluminum foil) and 0.75 mm (lithium foil), respectively. The half coin cells were subjected to cyclic and rate capability tests, as well as a test to determine impedance of the half coin cells. For each test method, the results for the blank (i.e., uncoated) separator and the above-described ceramic coated separators using the ceramic slurry compositions for Examples 1 and 3 were the comparative examples. The test methods are described below in addition to the results originating from such.

### Discharge Capacity Test

The discharge capacities for the half coin cells described above were evaluated at 25 °C, using a current rate of 0.05C for conditioning cycles and 0.5C for cyclic test. The half coin cells were evaluated in the voltage range from 3.0 V to 4.2 V versus Li/Li+, with a 10 minute rest time between charging and discharging. A constant voltage ("CV") mode and a constant current ("CC") mode were used in the case of the charging state. The results of the measured charge and discharge capacities, as well as the related initial coulombic efficiency and second coulombic efficiency values, are presented in Table 4. For each ceramic coated separator and reference, two substantially equivalent separators were produced and measurements were taken on each (except with regard to Examples 1 and 29), as suggested by the apparently duplicate example numbers in Table 4.

**Table 4**

| **Example # of Ceramic Slurry Used to Form the Separator in Half Coin Cell As Described Herein** | **Charge Capacity (mAh/g)** | **Discharge Capacity (mAh/g)** | **Irreversible Coulombic Efficiency (%)** | **Second Coulombic Efficiency (%)** |
|---|---|---|---|---|
| Reference - Blank Plasma Treated Separator | 152.5 | 146.3 | 96.0 | 98.8 |
| Reference - Blank Plasma Treated Separator | 151.7 | 147.1 | 96.9 | 99.2 |
| 1 | 155.5 | 146.0 | 93.9 | 99.0 |
| 3 | 154.0 | 148.1 | 96.1 | 99.0 |
| 3 | 152.1 | 146.3 | 96.2 | 99.0 |
| 21 | 153.7 | 146.7 | 95.4 | 98.1 |
| 21 | 152.8 | 145.9 | 95.5 | 98.4 |
| 23 | 154.5 | 147.8 | 95.7 | 98.1 |
| 23 | 153.9 | 146.7 | 95.3 | 99.0 |
| 29 | 152.8 | 147.2 | 96.3 | 99.0 |

The results in Table 4 suggest the charge and discharge capacities and irreversible coulombic efficiency (ICE%) at the first cycle for all cells are very similar with the blank cell. This suggests that the ceramic coated separator has little to no loss in electrochemical performance while potentially increasing the lifespan of the separator due to the improvements in shrinkage properties.

### Rate Capability Test - Lifestyle Characteristics

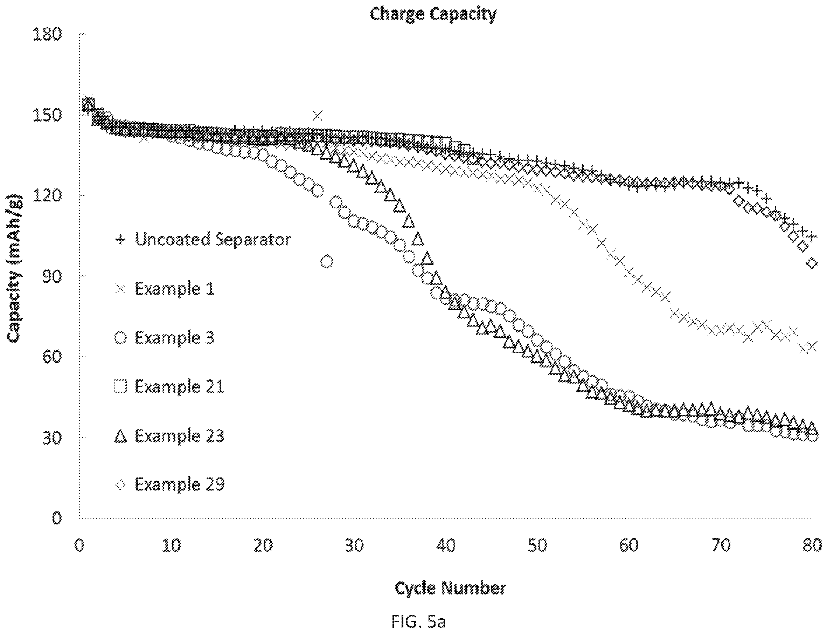

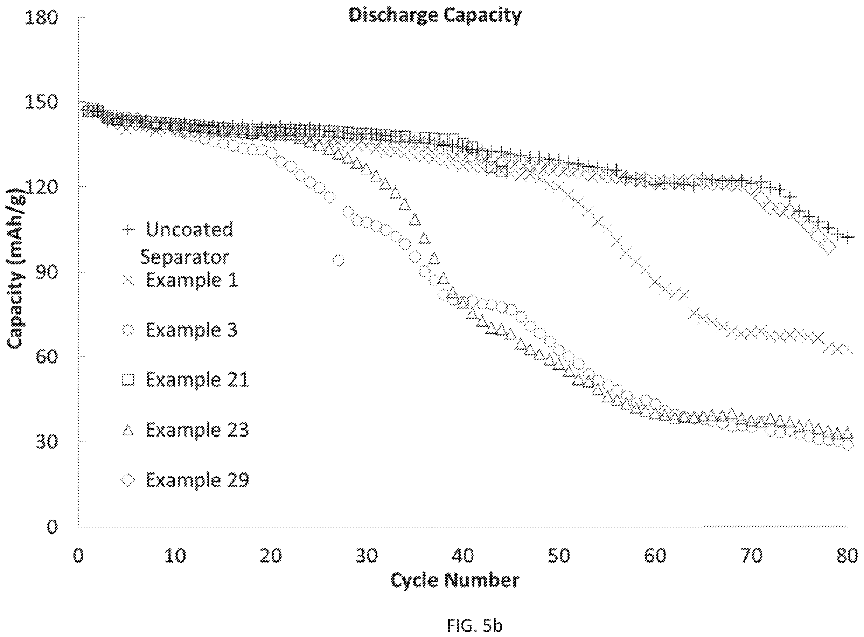

The rate capabilities of the above-described half coin cells were also evaluated at 25 °C, charging and discharging the half coin cells at a rate of 0.5C for 70 cycles. The results are shown in FIGS. 5a and 5b, which suggest that the cells with ceramic coated separators formed specifically from the slurry compositions of examples 21 and 29 (as described above) have good cycling performance compared to the comparative cells - i.e., the ceramic coated separators did not significantly impact the electrochemical properties of the cells in a negative manner.

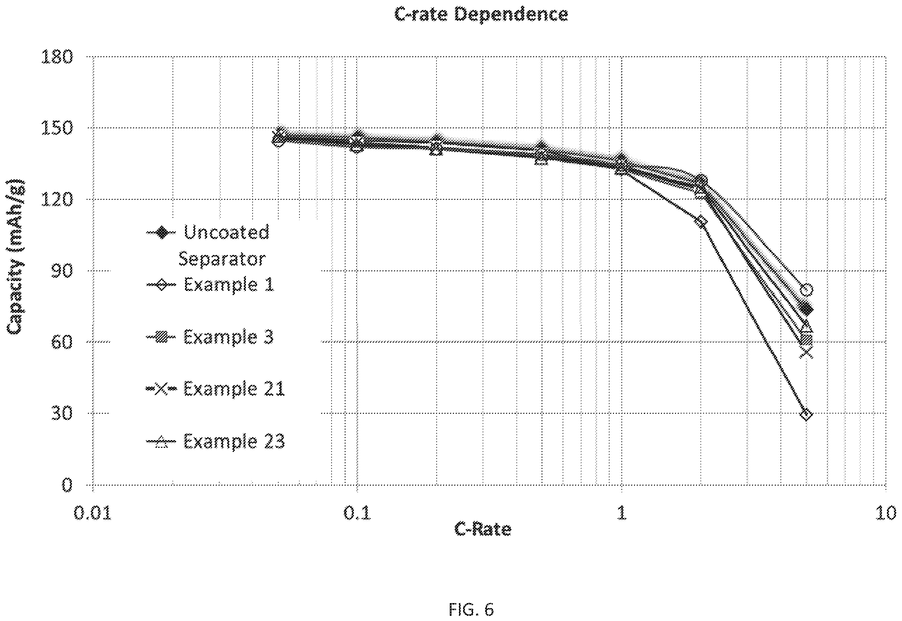

The rate capabilities of the above-described half coin cells were also evaluated by charging and discharging the cells at variable c-rates between 0.05C and 5C for approximately 1 cycle per rate. The results are shown in FIG. 6, which suggest that the ceramic coated separators formed specifically from the slurry compositions of examples 21 and 29 (as described above) did not significantly impact the electrochemical properties of the cells in a negative manner.

### Impedance

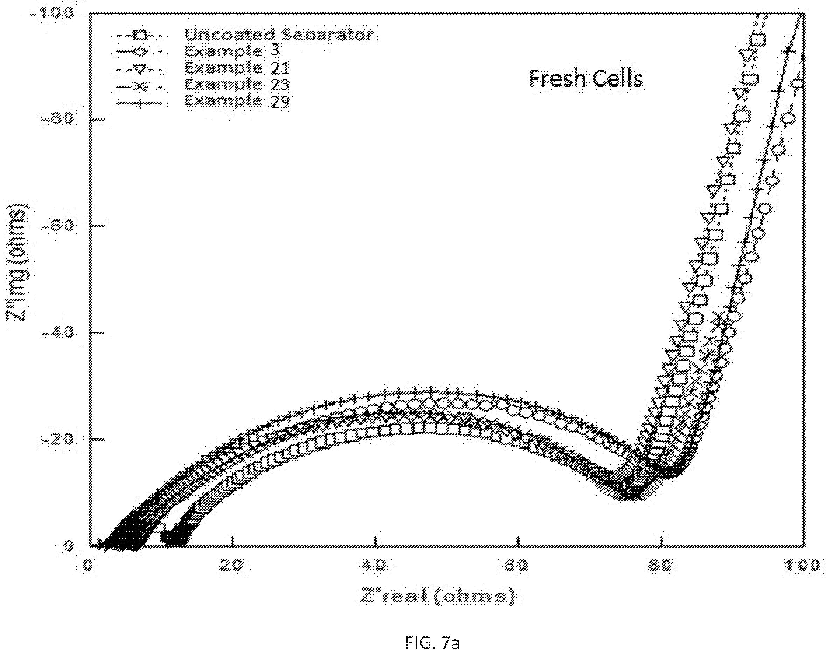

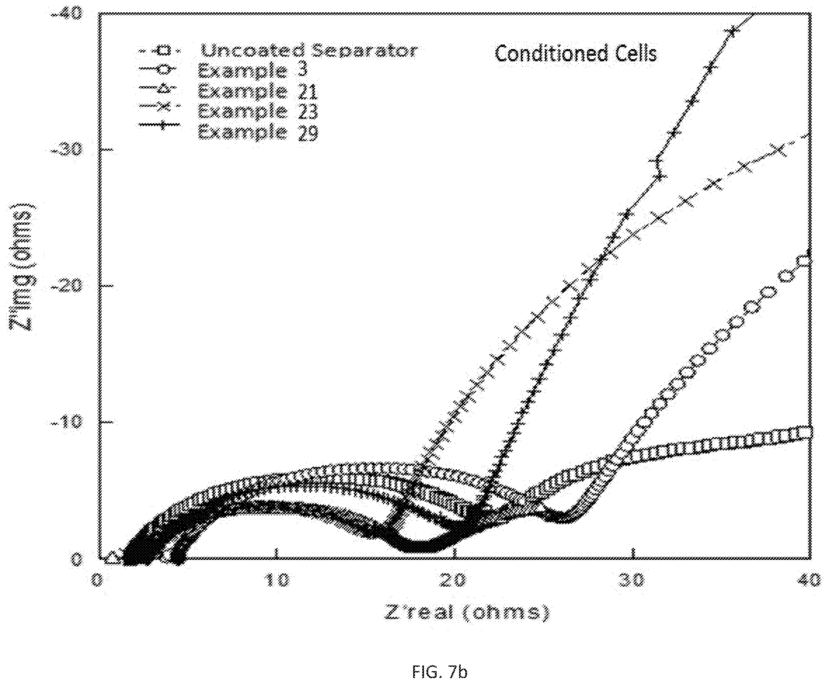

Impedance for the above-described half coin cells was measured using a Solartron® 1260 apparatus from Solartron Analytical (Leicester, UK). The results of which are shown in Table 5 below as well as in panels A and B of FIG. 7. Panel A of FIG. 7 shows the impedance for the half coin cells when fresh (i.e., prior to any conditioning) and panel B of FIG. 7 shows the impedance for the half coin cells after 2 conditioning cycles at 0.05C.

**Table 5**

| **Example # of Ceramic Slurry Used to Form the Separator in Half Coin Cell As Described Herein** | **Impedance (R_{ct})** |
|---|---|
| Reference - Blank Plasma Treated Separator | 75.2 |
| 1 | 80.0 |
| 3 | 103.1 |
| 21 | 89.0 |
| 23 | 86.0 |
| 29 | 90.2 |

The results in Table 5 and panels A and B of FIG. 7 suggest that the ceramic coated separator increased impedance slightly for fresh cells and impedance decreased after conditioning, thereby further illustrating that the presently disclosed ceramic coated separators do not significantly impact electrochemical performance while providing significant shrinkage resistance benefits.

### Ceramic Slurry Compositions with Surfactant

The experimental ceramic slurry compositions were prepared by adding ceramic powder (Dispal® 10F4 from Sasol®, Houston, TX), a polymer, a crosslinking agent, and a surfactant to water to form dispersions. These dispersions were mixed in a high shear mixer for 1 hour at 1500 rpm and viscosities of the dispersions were directly measured by a Brookfield® viscometer LV, spindle #2 at 25 °C and 30 rpm. The amounts (and type where necessary) of each component are identified in Table 6. Specifically, the polymer and crosslinking agent(s) of the binder compositions and the surfactants for the slurries are identified in Table 6 by commercial name and/or composition. More detailed information regarding the polymer and crosslinking agent is provided below Table 6. Additionally, the comparative examples are noted in Table 6 by the phrase "Comp." underneath the example number.

As used in Table 6 or below, "PVP" refers to polyvinylpyrrolidone, "VP" refers to vinylpyrrolidone, and "DMAEMA" refers to dimethylaminoethyl methacrylate.

Examples 37 - 49 in Table 6 are ceramic slurry compositions, prepared as described above, wherein the polymer comprised: (i) 35 g of 20% active CP845 (a copolymer produced from vinylpyrrolidone and DMAEMA commercially available from Ashland, Inc. (Wilmington, DE)), (ii) 7 g of 10% active Denacol™ EX-614 (a multifunctional epoxy compound commercially available from Nagase America (NY, NY)), (iii) 315 g water, (iv) 75.5 g of Dispal® 10F4 from Sasol®, Houston, TX, and (v) a surfactant specified in Table 6 along with the amount thereof.

The measured viscosity of the ceramic slurry compositions in Examples 37 - 49 ranged from 0.048 to 0.063 Pa·s prior to the addition of the surfactant.

Examples 50 - 62 in Table 6 are ceramic slurry compositions, prepared as described above, wherein the polymer comprised: (i) 35 g of 20% active CP845 (a copolymer produced from vinylpyrrolidone and DMAEMA commercially available from Ashland, Inc. (Wilmington, DE)), (ii) 7 g of 10% active Denacol™ EX-614 (a multifunctional epoxy compound commercially available from Nagase America (NY, NY)), (iii) 200 g water, (iv) 75.6 g of Dispal® 10F4 from Sasol®, Houston, TX, and (v) a surfactant specified in Table 6 along with the amount thereof.

The measured viscosity of the ceramic slurry compositions in Examples 50 - 62 ranged from 0.262 to 0.323 Pa·s prior to the addition of the surfactant.

Examples 63 - 66 in Table 6 are ceramic slurry compositions, prepared as described above, wherein the polymer comprised: (i) 7.5 g of 20% active CP845 (a copolymer produced from vinylpyrrolidone and DMAEMA commercially available from Ashland, Inc. (Wilmington, DE)), (ii) 1.5 g of a 10% active blend of sorbitol polyglycidyl ether and glycerol polyglycidyl ether, (iii) 40 g water, (iv) 21.5 g of Dispal® 10F4 from Sasol®, Houston, TX, and (v) a surfactant specified in Table 6 along with the amount thereof. Example 63 - 66 had additional water of 25 g, 120 g, 25 g, and 22 g added, respectively, to adjust their viscosities, as measured, to 0.348 Pa·s, 0.448 Pa·s, 0.264 Pa·s, and 0.519 Pa·s, respectively.

As demonstrated in Table 6, various types and amounts of surfactants were used in the ceramic slurry compositions. The wt% of each surfactant in the examples is noted in Table 6 based off the total weight of their respective ceramic slurry compositions identified above.

**Table 6**

| **Example #** | **Surfactant** | **Surfactant (g)** | **Wt % of Surfactant** |
|---|---|---|---|
| 37 (Comp.) | - | - | - |
| 38 | Surfadone(™) LP-100 ⁽¹⁾ | 0.022 | 0.005 |
| 39 | Surfadone(™) LP-100 | 0.060 | 0.014 |
| 40 | Surfadone(™) LP-100 | 0.125 | 0.029 |
| 41 | Surfynol® 440 ⁽²⁾ | 0.020 | 0.005 |
| 42 | Surfynol® 440 | 0.058 | 0.013 |
| 43 | Surfynol® 440 | 0.128 | 0.030 |
| 44 | Surfynol® 465 ⁽³⁾ | 0.020 | 0.005 |
| 45 | Surfynol® 465 | 0.059 | 0.014 |
| 46 | Surfynol® 465 | 0.12 | 0.028 |
| 47 | Lutensol® XL-70 ⁽⁴⁾ | 0.021 | 0.005 |
| 48 | Lutensol® XL-70 | 0.060 | 0.014 |
| 49 | Lutensol® XL-70 | 0.122 | 0.028 |
| 50 | Surfadone(™) LP-100 | 0.015 | 0.005 |
| 51 | Surfadone(™) LP-100 | 0.044 | 0.014 |
| 52 | Surfynol® 440 | 0.015 | 0.005 |
| 53 | Surfynol® 440 | 0.044 | 0.014 |
| 54 | Lutensol® XL-70 | 0.015 | 0.005 |
| 55 | Lutensol® XL-70 | 0.044 | 0.014 |
| 56 | Surfynol® 104 ⁽¹⁰⁾ | 0.015 | 0.005 |
| 57 | Surfynol® 104 | 0.044 | 0.014 |
| 58 | Surfynol® 440 | 0.044 | 0.014 |
| 59 | Surfynol® 440 and ViviPrint(™) 540 ⁽¹¹⁾ | 0.044 and 0.55 (10% active) | 0.031 (total) |
| 60 | ViviPrint(™) 540 | 0.55 (10% active) | 0.017 |
| 61 | Surfynol® 440 and ViviPrint(™) 540 | 0.044 and 0.55 (10% active) | 0.031 (total) |
| 62 | ViviPrint(™) 540 | 0.55 (10% active) | 0.017 |
| 63 | Surfynol® 440 | 0.049 | 0.051 |
| 64 | Surfynol® 440 | 0.026 | 0.013 |
| 65 | Surfynol® 440 | 0.049 | 0.051 |
| 66 | Surfynol® 440 | 0.049 | 0.053 |

| | | | |
|---|---|---|---|
| (1) Surfadone(™) LP-100: low-foaming, nonionic rapid wetting agent with an HLB of 6 and having no critical micelle concentration commercially available from Ashland, Inc. (Wilmington, DE). (2) Surfynol® 440: an ethoxylated low-foam wetting agent commercially available from Air Products and Chemicals, Inc. (Allentown, PA). (3) Surfynol® 465: an ethoxylated acetylenic diol commercially available from Air Products and Chemicals, Inc. (Allentown, PA). (4) Lutensol® XL-70: alkyl polyethylene glycol ether produced from the reaction of C10-Guebert alcohol and ethylene oxide is the commercial product Lutensol® XL-70 available from BASF (Ludwigshafen am Rhein, Germany). (5) ViviPrint™ 540: a 2-phase matrix comprising soluble PVP and nanoscale PVP particles approximately 320 nm in size commercially available from Ashland, Inc. (Wilmington, DE). | | | |

### Ceramic Coated Separators

As indicated in Table 7, the ceramic slurry compositions of Examples 37 - 66 were coated on either (i) a 25 µm thick untreated polypropylene separator commercially available as Celgard® 2500 from Celgard (Charlotte, NC), (ii) a 13 µm thick plasma treated polyethylene separator, or (iii) a 16 µm thick untreated polyethylene separator commercially available as Celgard® K1640 from Celgard (Charlotte, NC). Using a wire-wrapped drawdown rod, the ceramic slurry compositions were applied to the separators at a thickness of about 4 µm for the Celgard® 2500 separator and 2 µm and/or 4 µm for the Celgard® K1640 separator and the 13 µm thick plasma treated polyethylene separator, as specified in Table 7. The coated separators were dried and conditioned at 70 °C for 5 minutes. The thickness of the various features and/or embodiments herein was measured in micrometers using a Scanning Electron Microscope.

The ceramic slurry compositions were coated onto the separators using a drawdown rod, after which the coated separators were observed and it was noted whether the ceramic slurry coating spread out on the separator or beaded up. The coated separators were then dried and conditioned at 70 °C for 5 minutes. The dried ceramic coated separators were then observed for flaking and subjected to a Gurley porosity test. The results of the above-mentioned observations and tests are presented in Table 7.

### Gurley Porosity Test

Gurley porosity measurements of the ceramic coated separators were measured using a Gurley densometer from TMI Machine, Inc. (New Castle, DE) at 100 mL per second. Results are presented as a percentage, wherein a blank separator had a Gurley porosity measurement of 100% and the results for the examples are normalized in percentages versus the amount of time for an amount of air to get through the separator. An ideal Gurley porosity measurement for a ceramic coated separator is equal to or less than 130% as compared to the blank polyethylene or polypropylene separator which is 100%.

**Table 7**

| **Example # of Ceramic Slurry Used to Form the Ceramic Coated Separator** | **Separator** | **Observation of Ceramic Slurry Composition After Coating with Drawdown Rod** | **Thickness of Coating of Ceramic Slurry Composition (µm)** | **Gurley Porosity (%)** | **Observation for Flaking** |
|---|---|---|---|---|---|
| 37 | Celgard® 2500 | - | - | 100 | - |
| 38 | Celgard® 2500 | Beaded | 4 | - | Flaked |
| 39 | Celgard® 2500 | Spread | 4 | 109 | No Flaking |
| 40 | Celgard® 2500 | Spread | 4 | 114 | No Flaking |
| 41 | Celgard® 2500 | Beaded | 4 | - | No Flaking |
| 42 | Celgard® 2500 | Spread | 4 | 107 | No Flaking |
| 43 | Celgard® 2500 | Spread | 4 | 101 | No Flaking |
| 44 | Celgard® 2500 | Beaded | 4 | - | Flaked |
| 45 | Celgard® 2500 | Slowly Beaded | 4 | 106 | No Flaking |
| 46 | Celgard® 2500 | Spread | 4 | 109 | No Flaking |
| 47 | Celgard® 2500 | Beaded | 4 | - | Flaked |
| 48 | Celgard® 2500 | Spread | 4 | 119 | No Flaking |
| 49 | Celgard® 2500 | Spread | 4 | 115 | No Flaking |
| 50 | Celgard® 2500 | Beaded | 4 | - | Flaked |
| 51 | Celgard® 2500 | Spread | 4 | 128 | No Flaking |
| 52 | Celgard® 2500 | Beaded | 4 | - | Flaked |
| 53 | Celgard® 2500 | Spread | 4 | 113 | No Flaking |
| 54 | Celgard® 2500 | Beaded | 4 | - | Flaked |
| 55 | Celgard® 2500 | Spread | 4 | 116 | No Flaking |
| 56 | Celgard® 2500 | Beaded | 4 | - | No Flaking |
| 57 | Celgard® 2500 | Spread | 4 | 110 | No Flaking |
| 58 | Plasma Pre-treated Polyethylene 13 µm thick | Spread | 2 | 116 | No Flaking |
| 59 | Celgard® 2500 | Spread | 4 | 130 | No Flaking |
| 60 | Celgard® 2500 | Beaded | 4 | - | Flaked |
| 61 | Plasma Pre-treated Polyethylene 13 µm thick | Spread | 2 | 117 | No Flaking |
| 62 | Celgard® 2500 | Beaded | 4 | - | Flaked |
| 63 | Celgard® K1640 | Spread | 2 | 135 | No Flaking |
| | | Spread | 4 | 170 | No Flaking |
| | Celgard® 2500 | Spread | 4 | 146 | No Flaking |
| 64 | Plasma Pre-treated Polyethylene 13 µm thick | Spread | 2 | 135 | No Flaking |
| | | Spread | 4 | 140 | No Flaking |
| 65 | Plasma Pre-treated Polyethylene 13 µm thick | Spread | 2 | 181 | No Flaking |
| | | Spread | 4 | 184 | No Flaking |
| 66 | Plasma Pre-treated Polyethylene 13 µm thick | Spread | 2 | 116 | No Flaking |

As demonstrated in Table 7, there is a minimum weight percent for the surfactants to be effective at spreading the ceramic slurry composition on the separator without a significant amount of flaking. Examples 39, 40, 42 - 43, 45 - 46, 48 - 49, 51, 53, 55, 57 - 59, 61, 63 - 66 all demonstrate that surfactants present at a weight percent above 0.01 perform substantially better than like surfactants at a weight percent below 0.01. For instance, the above-described ceramic slurry composition in Example 41 comprising 0.005 wt% Surfynol® 440 beads up when coated, but spreads out in Examples 42 and 43 when present at 0.013 wt% and 0.03 wt%, respectively.

Table 7 also demonstrates that a surfactant such as Surfynol® 440 spreads well on a polyethylene separator when present in the ceramic slurry composition at a weight percent greater than 0.01 whether it is coated at a thickness of 2 µm or 4 µm, as demonstrated in Examples 58, 61, 63, and 64 - 66.

Additionally, Table 7 demonstrates that the presently disclosed surfactants are capable of spreading on untreated polypropylene and polyethylene as well as treated polyethylene, and have good coating properties thereon.

### Thermal Shrinkage after Heat Treatment at 167 °C for 30 Minutes

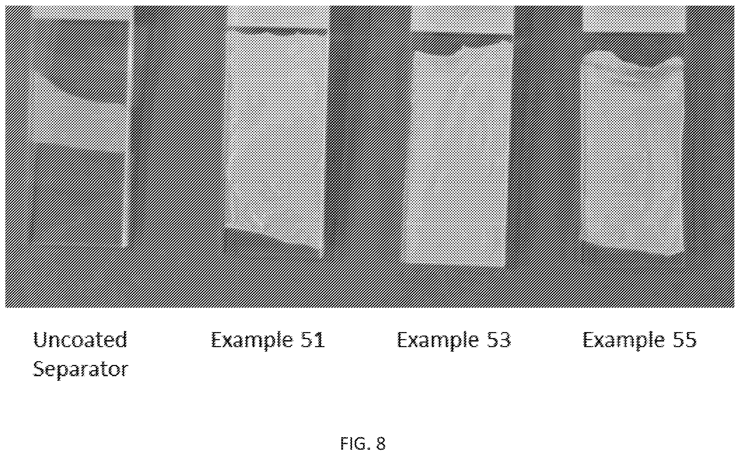

Select examples of ceramic coated separators were also heat treated at 167 °C for 30 minutes to evaluate how much the ceramic coated separator will shrink under higher temperature conditions. As known to a person of ordinary skill in the field, shrinkage of the separator may result in electrical short circuits, thereby causing the battery to fail and potentially cause safety hazards. FIG. 8 illustrates the shrinkage from a qualitative perspective for ceramic coated separators produced using the ceramic slurries described in Examples 51, 53, and 55 presented in Table 6 as well as the uncoated, untreated polypropylene separator Celgard® 2500 referenced as Example 37 in Table 6. The ceramic slurries were applied at a thickness of about 4 µm. As can be seen from FIG. 8, the ceramic coated separators had good shrinkage properties at a temperature of 167 °C for 30 minutes.

It is envisioned that any of the other experimental ceramic coating compositions detailed above could be coated on the separators disclosed herein in the examples and would have similar shrinkage properties as illustrated in FIG 8.

### Thermal Shrinkage after Heat Treatment at 140 °C for 30 Minutes

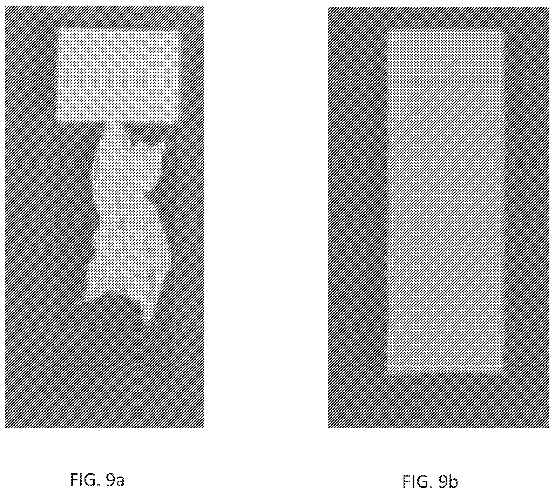

Example 63 of the ceramic slurry compositions detailed in Table 6 above was coated on a 16 µm thick polyethylene separator commercially available as Celgard® K1640 from Celgard (Charlotte, NC) at 2 µm and 4 µm and conditioned at 140 °C for 30 minutes to observe the shrinkage of the coating. FIG. 9 illustrates the shrinkage from a qualitative perspective showing that the coating of the ceramic slurry composition in Example 63 shrunk significantly when coated on Celgard® K1640 at 2 µm (Panel A of FIG. 9) but hardly shrunk when coated at 4 µm (Panel B of FIG. 9).

### Half Coin Cells

Four half coin cells were prepared. Two half coin cells were prepared using (i) a blank uncoated, untreated 16 µm thick polyethylene separator commercially available as Celgard® K1640 from Celgard (Charlotte, NC) as the reference sample and (ii) a Celgard® K1640 separator coated with 2 µm of the ceramic slurry composition of Example 63 (as detailed above in Table 6). Additionally, two half coin cells were prepared using (i) a blank uncoated, untreated 25 µm polypropylene separator commercially available as Celgard® 2500 from Celgard (Charlotte, NC) as the reference and (ii) a Celgard® 2500 separator coated with 4 µm of the ceramic slurry composition of Example 63 (as detailed above in Table 6).

The half coin cells had a 20 mm diameter and a 3.2 mm height (i.e., "CR-2032" half coin cells) and were produced using (i) a cathode comprising nickel cobalt manganese and a polyvinylidene fluoride binder, (ii) a lithium metal anode, (iii) 1M LiPF₆ in EC/DEC/DMC (1:1:1 volume%), as the electrolyte, and (iv) the above-noted uncoated, untreated separator and ceramic coated separator. The half coin cells were subjected to rate capability tests, as well as a test to determine impedance of the half coin cells. The test methods are described below in addition to the results originating from such.

### Rate Capability Test - Lifestyle Characteristics

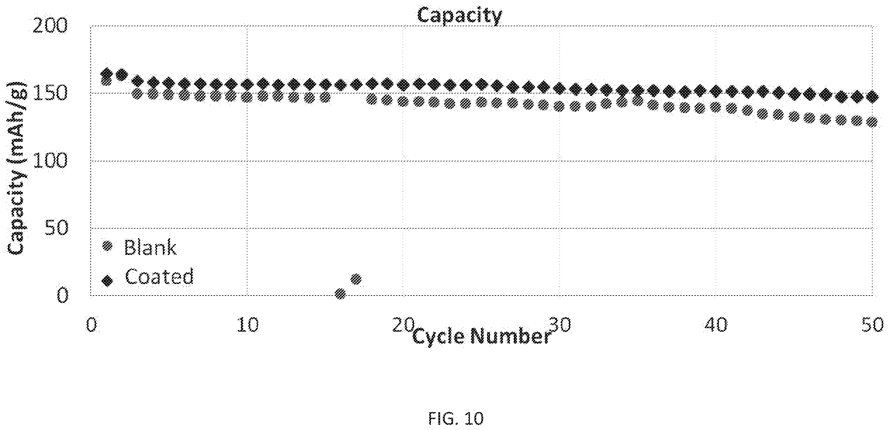

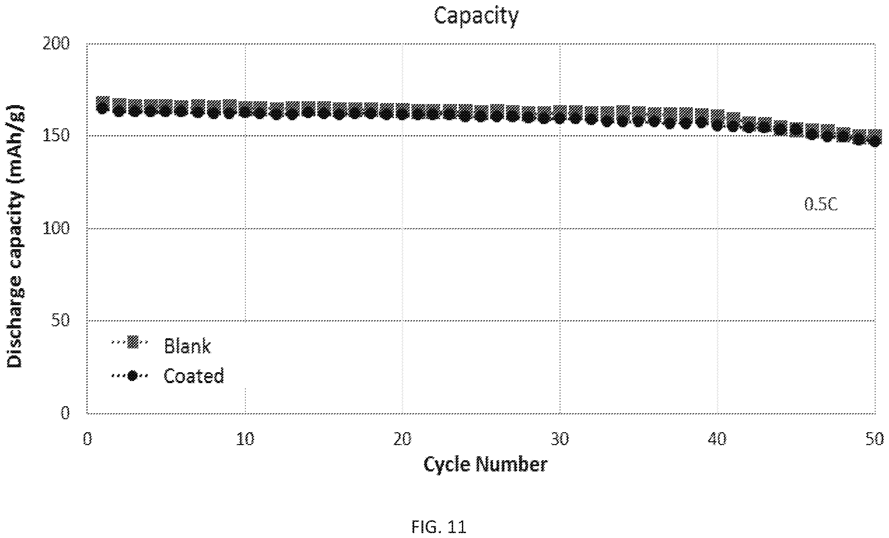

The rate capabilities of the above-described half coin cells were evaluated at 25 °C, charging and discharging the half coin cells at a rate of 0.5C for 50 cycles. The results are shown in FIG. 10 for the uncoated and coated Celgard® K1640 separator (as described above) and FIG. 11 for the uncoated and coated Celgard® 2500 separator (as described above). For both substrates, the slurry composition has good cycling performance compared to the uncoated separators suggesting that the ceramic coatings did not significantly impact the electrochemical properties of the separators in a negative manner.

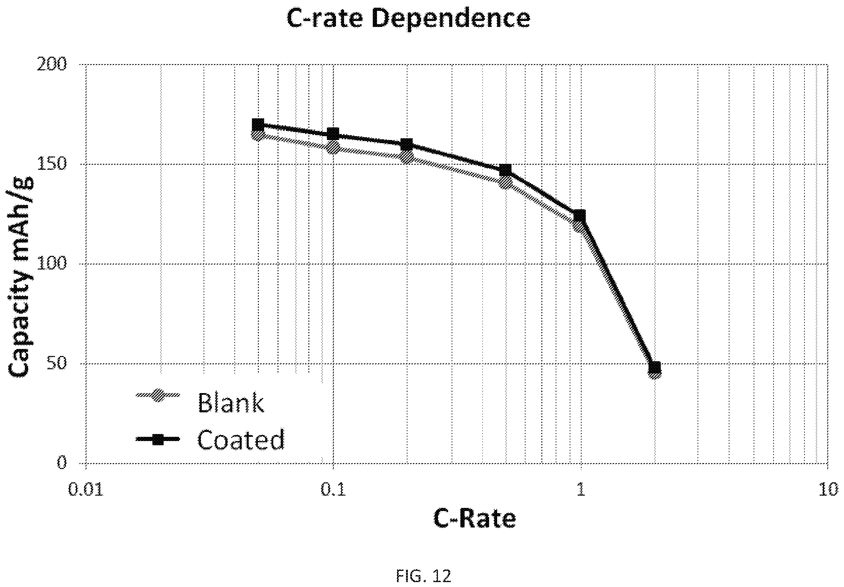

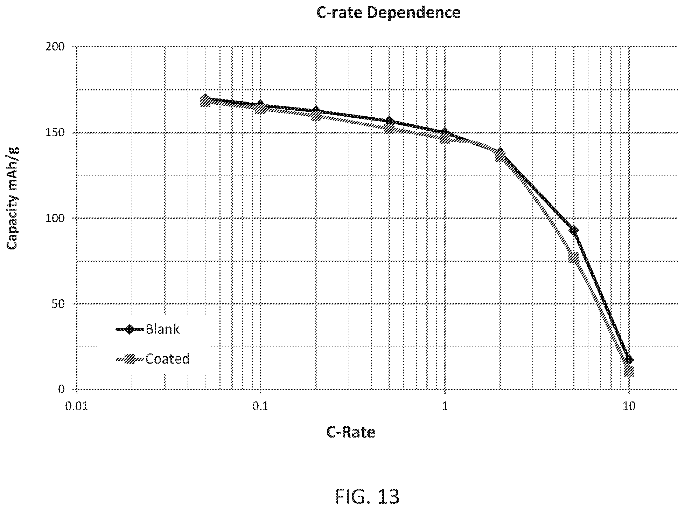

The rate capabilities of the above-described half coin cells were also evaluated by (i) charging and discharging the cells comprising the coated and uncoated Celgard® K1640 separator at variable C-rates between 0.05C and 2C for approximately 1 cycle per rate, and (ii) charging and discharging the cells comprising the coated and uncoated Celgard® 2500 separator at variable C-rates between 0.05C and 10C for approximately 1 cycle per rate. The results are shown in FIGS. 12 and 13, respectively, which suggest that the ceramic coated separators formed specifically from the slurry composition of Example 63 (as described above) did not significantly impact the electrochemical properties of the cells in a negative manner.

### Impedance

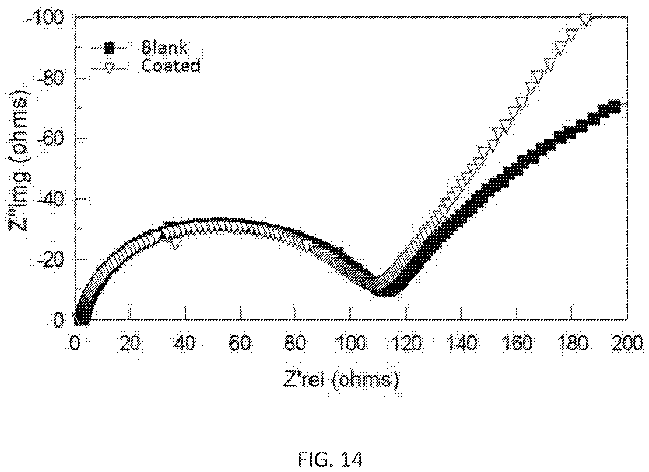

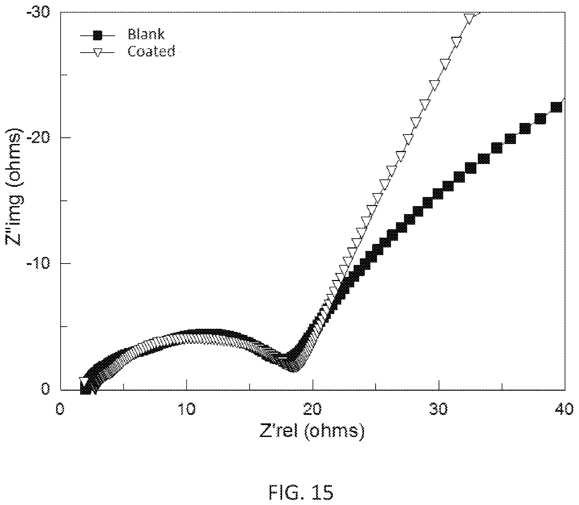

Impedance for the above-described half coin cells was measured using a Solartron® 1260 apparatus from Solartron Analytical (Leicester, UK). The results of which are shown in FIGS. 14 and 15. FIG. 14 shows the impedance for the half coin cells using the coated and uncoated Celgard® K1620 separator (as described above) after 2 conditioning cycles at 0.05C. FIG. 15 shows the impedance for the half coin cells using the coated and uncoated Celgard® 2500 (as described above) after 2 conditioning cycles at 0.05C.

The results in FIGS. 14 and 15 suggest that the ceramic coated separators were similar to their respective uncoated separators, thereby further illustrating that the presently disclosed ceramic coated separators do not significantly impact electrochemical performance while providing significant shrinkage resistance benefits.

Thus, in accordance with the present disclosure, a ceramic binder composition, a ceramic coated separator, and an electrochemical cell for a battery comprising the ceramic coated separator, as well as methods of producing and using the same have been provided. Although the present disclosure has been described in conjunction with the specific language set forth herein above, it is evident that many alternatives, modifications, and variations will be apparent to those skilled in the art. Accordingly, it is intended to embrace all such alternatives, modifications, and variations that fall within the broad scope of the presently disclosed concept(s). Changes may be made in the construction and the operation of the various components, elements, and assemblies described herein, as well as in the steps or the sequence of steps of the methods described herein, without departing from the scope of the presently disclosed concept(s) as defined in the appended claims.

## Claims

1. A ceramic binder composition, comprising:
- at least one ceramic particle; and
- a binder comprising a polymer at least partially crosslinked with a crosslinking agent, wherein the polymer is selected from the group consisting of (a) a copolymer produced from monomers comprising vinylpyrrolidone and dimethylaminoethyl methacrylate (DMAEMA), (b) a copolymer produced from monomers comprising vinylpyrrolidone, vinylcaprolactam, and DMAEMA, (c) a copolymer produced from monomers comprising vinylpyrrolidone, vinylcaprolactam, and dimethylaminopropyl methacrylamide (DMAPMA), and (d) combinations thereof, or (e) a copolymer produced from monomers comprising vinylpyrrolidone and glycidyl methacrylate.

2. The composition of claim 1, wherein the at least one ceramic particle is selected from the group consisting of alumina, alumina oxide hydroxide, SiO₂, BaSO₄, TiO₂, SnO₂, CeO₂, ZrO₂, BaTiO₃, Y₂O₃, B₂O₃, and combinations thereof.

3. The composition of claim 1, wherein the polymer is the copolymer (a) produced from monomers comprising vinylpyrrolidone and DMAEMA at a molar ratio of from 80:20 to 99:1 of vinylpyrrolidone to DMAEMA.

4. The composition of any one of claims 1 to 3, wherein the crosslinking agent in the copolymers (a), (b), (c) and (d) comprises a compound comprising at least two epoxide groups.

5. The composition of claim 4, wherein the crosslinking agent is a water dispersible multi-epoxy resin selected from the group consisting of bisphenol A diepoxy, a novolac epoxy resin, an epoxidized sorbitol resin, and combinations thereof.

6. The composition of claim 4, wherein the crosslinking agent comprises at least one of a water dispersible polyglycidyl ether and a compound having at least two glycidyl (meth)acrylate moieties.

7. The composition of claim 1, wherein the crosslinking agent in the copolymer (e) is selected from the group consisting of a water dispersible polyamine, a polycarboxylic acid, and combinations thereof.

8. The composition of claim 7, wherein the crosslinking agent is a water dispersible polyamine selected from the group consisting of a copolymer produced from monomers comprising vinylpyrrolidone and dimethylaminopropyl methacrylamide (DMAPMA), a copolymer produced from monomers comprising vinylpyrrolidone and dimethylaminoethyl methacrylate (DMAEMA), a copolymer produced from monomers comprising vinylpyrrolidone, vinylcaprolactam, and DMAEMA, a copolymer produced from monomers comprising vinylpyrrolidone, vinylcaprolactam, and DMAPMA, diethylenetriamine, tetraethylenepentamine, triethylenetetramine, and combinations thereof.

9. The composition of any one of claims 1, 7 and 8, wherein the polymer is the copolymer (e) and the composition further comprises a catalyst selected from the group consisting of imidazole, imidazole derivatives, and combinations thereof.

10. The composition of any one of claims 1 to 9, further comprising a surfactant including at least one of (a) an N-alkyl pyrrolidone, wherein the alkyl group is in a range of from C1 to C10, (b) an alkyl polyethylene glycol ether produced from the reaction of a C1 to C18-Guerbet alcohol and ethylene oxide, and (c) an acetylenic diol type surfactant represented by at least one of formulas (I) and (II): 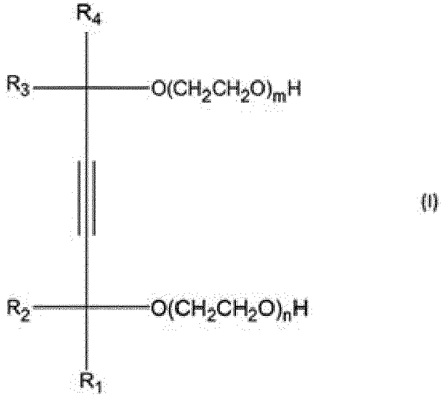 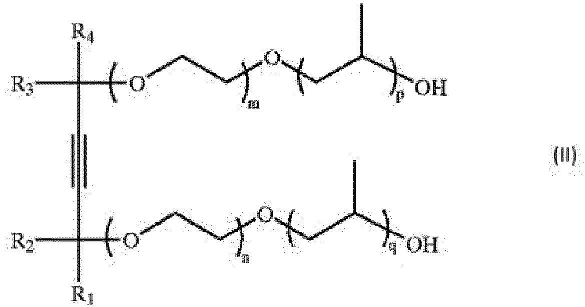 wherein R₁ and R₄ are straight or branched alkyl chains having from 1 to 4 carbon atoms; R₂ and R₃ are H, methyl, or ethyl groups; (m+n) is in a range of from 2 to 40; and (p+q) is in a range of from 1 to 20.

11. A ceramic slurry composition, comprising:
- at least one ceramic particle;
- a polymer selected from the group consisting of (a) a copolymer produced from monomers comprising vinylpyrrolidone and dimethylaminoethyl methacrylate (DMAEMA), (b) a copolymer produced from monomers comprising vinylpyrrolidone, vinylcaprolactam, and DMAEMA, (c) a copolymer produced from monomers comprising vinylpyrrolidone, vinylcaprolactam, and dimethylaminopropyl methacrylamide (DMAPMA), and (d) combinations thereof, or (e) a copolymer produced from monomers comprising vinylpyrrolidone and glycidyl methacrylate;
- a crosslinking agent; and
- a solvent.

12. The composition of claim 11, wherein the solvent is selected from the group consisting of water, ethanol, N-methylpyrrolidone, and combinations thereof.

13. The composition of claim 11, wherein (i) the at least one ceramic particle is present in the composition in a range of from 5 to 30 wt% of the composition, (ii) the polymer is present in the composition a range of from 1 to 20 wt% of the composition, (iii) the crosslinking agent is present in the composition in a range of from 1 to 5 wt% of the composition, and (iv) the solvent is present in the composition in a range of from 50 to 90 wt% of the composition.

14. The composition of claim 11, further comprising a catalyst selected from the group consisting of imidazole, imidazole derivatives, and combinations thereof.

15. The composition of any one of claims 11 to 14, wherein the composition further comprises a surfactant comprising at least one of (a) an N-alkyl pyrrolidone, wherein the alkyl group is in a range of from C1 to C10, (b) an alkyl polyethylene glycol ether produced from the reaction of a C1 to C18-Guerbet alcohol and ethylene oxide, and (c) an acetylenic diol type surfactant represented by at least one of formula (I) and (II): 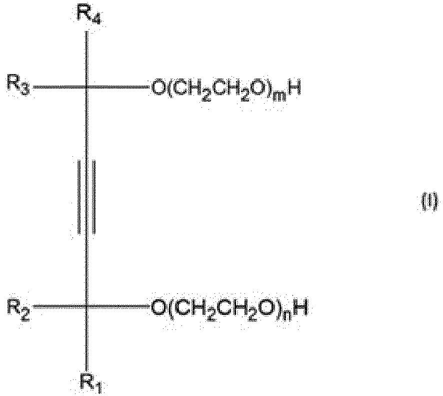 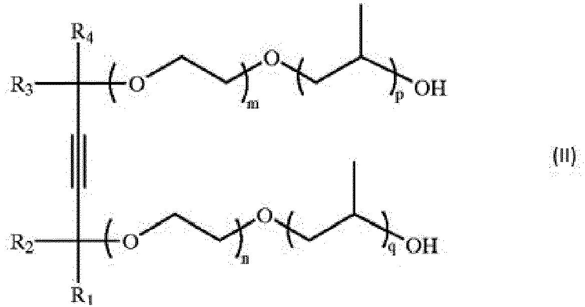 wherein R₁ and R₄ are straight or branched alkyl chains having from 1 to 4 carbon atoms; R₂ and R₃ are H, methyl, or ethyl groups; (m+n) is in a range of from 2 to 40; and (p+q) is in a range of from 1 to 20.

## Patentansprüche

1. Keramische Bindemittelzusammensetzung, umfassend:
- mindestens ein keramisches Teilchen; und
- ein Bindemittel, das ein Polymer, welches mindestens teilweise mit einem Vernetzungsmittel vernetzt ist, umfasst, wobei das Polymer ausgewählt ist aus der Gruppe bestehend aus (a) einem Copolymer, welches aus Monomeren, die Vinylpyrrolidon und Dimethylaminoethylmethacrylat (DMAEMA) umfassen, hergestellt ist, (b) einem Copolymer, welches aus Monomeren, die Vinylpyrrolidon, Vinylcaprolactam und DMAEMA umfassen, hergestellt ist, (c) einem Copolymer, welches aus Monomeren, die Vinylpyrrolidon, Vinylcaprolactam und Dimethylaminopropylmethacrylamid (DMAPMA) umfassen, hergestellt ist, und (d) Kombinationen davon, oder (e) einem Copolymer, welches aus Monomeren, die Vinylpyrrolidon und Glycidylmethacrylat umfassen, hergestellt ist.

2. Zusammensetzung nach Anspruch 1, wobei das mindestens eine keramische Teilchen ausgewählt ist aus der Gruppe bestehend aus Aluminiumoxid, Aluminiumoxidhydroxid, SiO₂, BaSO₄, TiO₂, SnO₂, CeO₂, ZrO₂, BaTiO₃, Y₂O₃, B₂O₃ und Kombinationen davon.

3. Zusammensetzung nach Anspruch 1, wobei das Polymer das Copolymer (a) ist, welches aus Monomeren, die Vinylpyrrolidon und DMAEMA in einem Molverhältnis von 80:20 bis 99:1 Vinylpyrrolidon zu DMAEMA umfassen, hergestellt ist.

4. Zusammensetzung nach mindestens einem der Ansprüche 1 bis 3, wobei das Vernetzungsmittel in den Copolymeren (a), (b), (c) und (C) eine Verbindung umfasst, die mindestens zwei Epoxidgruppen umfasst.

5. Zusammensetzung nach Anspruch 4, wobei das Vernetzungsmittel ein Wasser-dispergierbares Multi-Epoxidharz ist, ausgewählt aus der Gruppe bestehend aus Bisphenol A Diepoxid, einem Novolac-Epoxidharz, einem epoxidierten Sorbitolharz und Kombinationen davon.

6. Zusammensetzung nach Anspruch 4, wobei das Vernetzungsmittel mindestens einen Vertreter aus einem Wasser-dispergierbaren Polyglycidylether und einer Verbindung mit mindestens zwei Glycidyl(meth)acrylat-Einheiten umfasst.

7. Zusammensetzung nach Anspruch 1, wobei das Vernetzungsmittel in dem Copolymer (e) ausgewählt ist aus der Gruppe bestehend aus einem Wasser-dispergierbaren Polyamin, einer Polycarbonsäure und Kombinationen davon.

8. Zusammensetzung nach Anspruch 7, wobei das Vernetzungsmittel ein Wasser-dispergierbares Polyamin ist, ausgewählt aus der Gruppe bestehend aus einem Copolymer, welches aus Monomeren, die Vinylpyrrolidon und Dimethylaminopropylmethacrylamid (DMAPMA) umfassen, hergestellt ist, einem Copolymer, welches aus Monomeren, die Vinylpyrrolidon und Dimethylaminoethylmethacrylat (DMAEMA) umfassen, hergestellt ist, einem Copolymer, welches aus Monomeren, die Vinylpyrrolidon, Vinylcaprolactam und DMAEMA umfassen, hergestellt ist, einem Copolymer, welches aus Monomeren, die Vinylpyrrolidon, Vinylcaprolactam und DMAPMA umfassen, hergestellt ist, Diethylentriamin, Tetraethylenpentamin, Triethylentetramin und Kombinationen davon.

9. Zusammensetzung nach mindestens einem der Ansprüche 1, 7 und 8, wobei das Polymer das Copolymer (e) ist und die Zusammensetzung ferner einen Katalysator, ausgewählt aus der Gruppe bestehend aus Imidazol, Imidazol-Derivaten und Kombinationen davon, umfasst.

10. Zusammensetzung nach mindestens einem der Ansprüche 1 bis 9, ferner umfassend ein Tensid, das mindestens einen Vertreter einschließt aus (a) einem N-Alkylpyrrolidon, wobei die Alkylgruppe in einem Bereich von C1 bis C10 ist, (b) einem Alkylpolyethylenglykolether, welcher durch die Umsetzung eines C1 bis C18-Guerbet Alkohols und Ethylenoxid hergestellt wurde, und (c) einem Acetylendiol-artigen Tensid mit mindestens einer der Formeln (I) und (II): 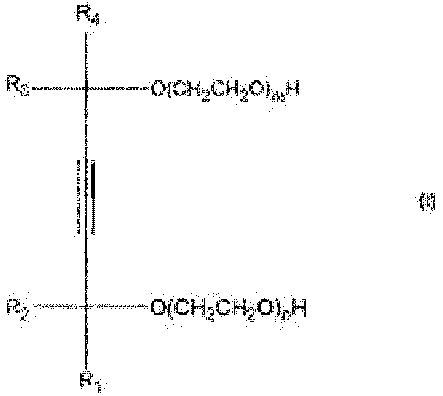 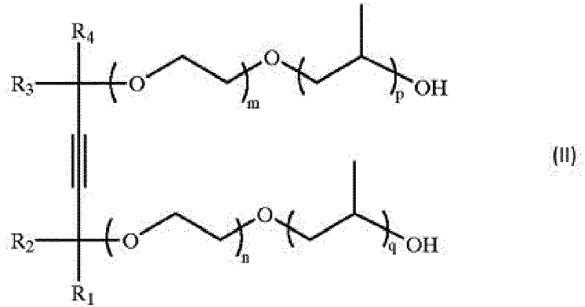 worin R₁ und R₄ lineare oder verzweigte Alkylketten mit 1 bis 4 Kohlenstoffatomen sind; R₂ und R₃ H, Methyl oder Ethylgruppen sind; (m+n) in einem Bereich von 2 bis 40 liegt; und (p+q) in einem Bereich von 1 bis 20 liegt.

11. Keramische Aufschlämmzusammensetzung, umfassend:
- mindestens ein keramisches Teilchen;
- ein Polymer, ausgewählt aus der Gruppe bestehend aus (a) einem Copolymer, welches aus Monomeren, die Vinylpyrrolidon und Dimethylaminoethylmethacrylat (DMAEMA) umfassen, hergestellt ist, (b) einem Copolymer, welches aus Monomeren, die Vinylpyrrolidon, Vinylcaprolactam und DMAEMA umfassen, hergestellt ist, (c) einem Copolymer, welches aus Monomeren, die Vinylpyrrolidon, Vinylcaprolactam und Dimethylaminopropylmethacrylamid (DMAPMA) umfassen, hergestellt ist, und (d) Kombinationen davon, oder (e) einem Copolymer, welches aus Monomeren, die Vinylpyrrolidon und Glycidylmethacrylat umfassen, hergestellt ist;
- ein Vernetzungsmittel; und
- ein Lösungsmittel.

12. Zusammensetzung nach Anspruch 11, wobei das Lösungsmittel ausgewählt ist aus der Gruppe bestehend aus Wasser, Ethanol, N-Methylpyrrolidon und Kombinationen davon.

13. Zusammensetzung nach Anspruch 11, wobei (i) das mindestens eine keramische Teilchen in der Zusammensetzung vorhanden ist in einem Bereich von 5 bis 30 Gew.-% der Zusammensetzung, (ii) das Polymer in der Zusammensetzung vorhanden ist in einem Bereich von 1 bis 20 Gew.-% der Zusammensetzung, (iii) das Vernetzungsmittel in der Zusammensetzung vorhanden ist in einem Bereich von 1 bis 5 Gew.-% der Zusammensetzung, und (iv) das Lösungsmittel in der Zusammensetzung vorhanden ist in einem Bereich von 50 bis 90 Gew.-% der Zusammensetzung.

14. Zusammensetzung nach Anspruch 11, ferner umfassend einen Katalysator, ausgewählt aus der Gruppe bestehend aus Imidazol, Imidazol-Derivaten und Kombinationen davon.

15. Zusammensetzung nach mindestens einem der Ansprüche 11 bis 14, wobei die Zusammensetzung ferner ein Tensid umfasst, welches mindestens einen Vertreter umfasst aus (a) einem N-Alkylpyrrolidon, wobei die Alkylgruppe in einem Bereich von C1 bis C10 ist, (b) einem Alkylpolyethylenglykolether, welcher durch die Umsetzung eines C1 bis C18-Guerbet Alkohols und Ethylenoxid hergestellt wurde, und (c) einem Acetylendiol-artigen Tensid mit mindestens einer der Formeln (I) und (II): 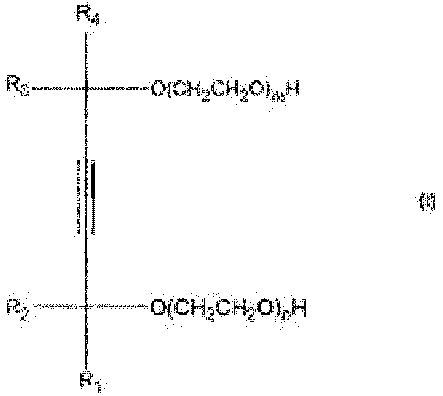 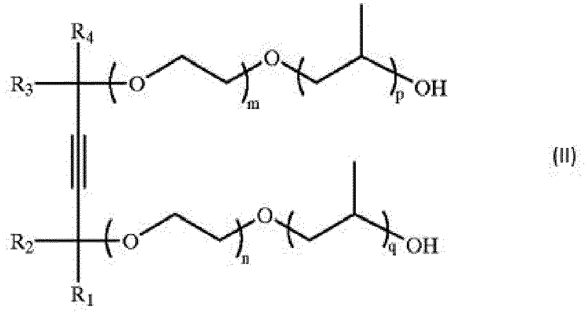 worin R₁ und R₄ lineare oder verzweigte Alkylketten mit 1 bis 4 Kohlenstoffatomen sind; R₂ und R₃ H, Methyl oder Ethylgruppen sind; (m+n) in einem Bereich von 2 bis 40 liegt; und (p+q) in einem Bereich von 1 bis 20 liegt.

## Revendications

1. Composition de liant céramique, comprenant :
- au moins une particule céramique ; et
- un liant comprenant un polymère réticulé au moins partiellement avec un agent de réticulation, dans laquelle le polymère est sélectionné dans le groupe consistant en (a) un copolymère produit à partir de monomères comprenant de la vinylpyrrolidone et du méthacrylate de diméthylaminoéthyle (DMAEMA), (b) un copolymère produit à partir de monomères comprenant de la vinylpyrrolidone, du vinylcaprolactame et du DMAEMA, (c) un copolymère produit à partir de monomères comprenant de la vinylpyrrolidone, du vinylcaprolactame et du diméthylaminopropylméthacrylamide (DMAPMA) et (d) des combinaisons de ceux-ci, ou (e) un copolymère produit à partir de monomères comprenant de la vinylpyrrolidone et du méthacrylate de glycidyle.

2. Composition selon la revendication 1, dans laquelle la au moins une particule céramique est sélectionnée dans le groupe consistant en l'alumine, l'hydroxyde d'oxyde d'alumine, SiO₂, BaSO₄, TiO₂, SnO₂, CeO₂, ZrO₂, BaTiO₃, Y₂O₃, B₂O₃, et des combinaisons de ceux-ci.

3. Composition selon la revendication 1, dans laquelle le polymère est le copolymère (a) produit à partir de monomères comprenant de la vinylpyrrolidone et du DMAEMA selon un rapport molaire de 80/20 à 99/1 de la vinylpyrrolidone sur le DMAEMA.

4. Composition selon l'une quelconque des revendications 1 à 3, dans laquelle l'agent de réticulation dans les copolymères (a), (b), (c) et (d) comprend un composé comprenant au moins deux groupes époxyde.

5. Composition selon la revendication 4, dans laquelle l'agent de réticulation est une résine multiépoxy dispersible dans l'eau sélectionnée dans le groupe consistant en un bisphénol A diépoxy, une résine époxy novolaque, une résine sorbitol époxydée, et des combinaisons de ceux-ci.

6. Composition selon la revendication 4, dans laquelle l'agent de réticulation comprend au moins l'un parmi un polyglycidyléther dispersible dans l'eau et un composé présentant au moins deux fragments (méth)acrylate de glycidyle.

7. Composition selon la revendication 1, dans laquelle l'agent de réticulation dans le copolymère (e) est sélectionné dans le groupe consistant en une polyamine dispersible dans l'eau, un acide polycarboxylique, et des combinaisons de ceux-ci.

8. Composition selon la revendication 7, dans laquelle l'agent de réticulation est une polyamine dispersible dans l'eau sélectionnée dans le groupe consistant en un copolymère produit à partir de monomères comprenant de la vinylpyrrolidone et du diméthylaminopropylméthacrylamide (DMAPMA), un copolymère produit à partir de monomères comprenant de la vinylpyrrolidone et du méthacrylate de diméthylaminoéthyle (DMAEMA), un copolymère produit à partir de monomères comprenant de la vinylpyrrolidone, du vinylcaprolactame et du DMAEMA, un copolymère produit à partir de monomères comprenant de la vinylpyrrolidone, du vinylcaprolactame et du DMAPMA, la diéthylènetriamine, la tétraéthylènepentamine, la triéthylènetétramine, et des combinaisons de ceux-ci.

9. Composition selon l'une quelconque des revendications 1, 7 et 8, dans laquelle le polymère est le copolymère (e) et la composition comprend en outre un catalyseur sélectionné dans le groupe consistant l'imidazole, les dérivés d'imidazole, et des combinaisons de ceux-ci.

10. Composition selon l'une quelconque des revendications 1 à 9, comprenant en outre un tensioactif incluant au moins l'un parmi (a) une N-alkyl-pyrrolidone, dans laquelle le groupe alkyle est dans une plage de C1 à C10, (b) un éther alkylique de polyéthylène glycol produit à partir de la réaction d'un alcool de Guerbet en C1 à C18 et d'oxyde d'éthylène, et c) un tensioactif de type diol acétylénique représenté par au moins une des formules (I) et (II) : 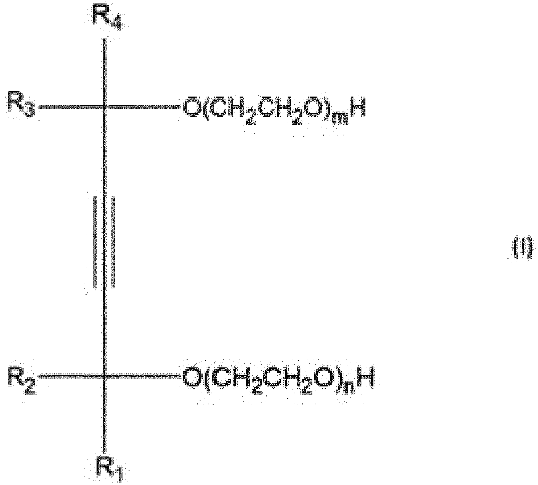 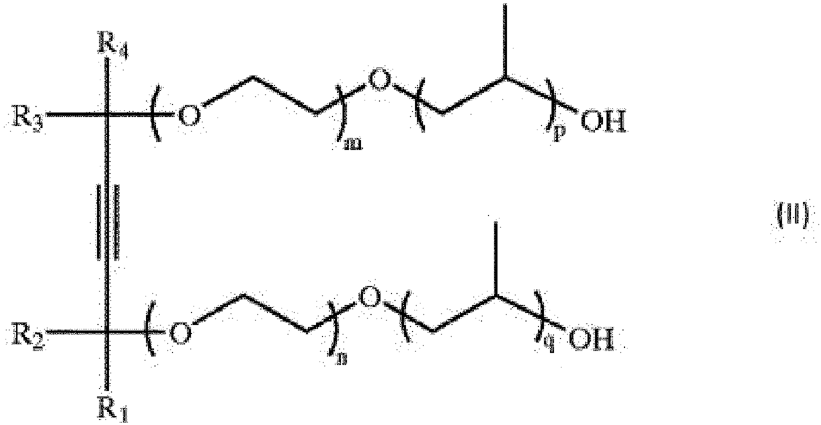 dans laquelle R₁ et R₄ sont des chaînes alkyle droites ou ramifiées présentant 1 à 4 atomes de carbone ; R₂ et R₃ sont H, ou des groupes méthyle ou éthyle ; (m + n) est dans une plage de 2 à 40 ; et (p + q) est dans une plage de 1 à 20.

11. Composition de suspension céramique, comprenant :
- au moins une particule céramique ;
- un polymère sélectionné dans le groupe consistant en (a) un copolymère produit à partir de monomères comprenant de la vinylpyrrolidone et du méthacrylate de diméthylaminoéthyle (DMAEMA), (b) un copolymère produit à partir de monomères comprenant de la vinylpyrrolidone, du vinylcaprolactame et du DMAEMA, (c) un copolymère produit à partir de monomères comprenant de la vinylpyrrolidone, du vinylcaprolatame et du diméthylaminopropylméthacrylamide (DMAPMA), et (d) les combinaisons de ceux-ci, ou (e) un copolymère produit à partir de monomères comprenant de la vinylpyrrolidone et du méthacrylate de glycidyle ;
- un agent de réticulation ; et
- un solvant.

12. Composition selon la revendication 11, dans laquelle le solvant est sélectionné dans le groupe consistant en l'eau, l'éthanol, la N-méthylpyrrolidone, et des combinaisons de ceux-ci.

13. Composition selon la revendication 11, dans laquelle (i) la au moins une particule céramique est présente dans la composition dans une plage de 5 à 30 % en poids de la composition, (ii) le polymère est présent dans la composition dans une plage de 1 à 20 % en poids de la composition, (iii) l'agent de réticulation est présent dans la composition dans une plage de 1 à 5 % en poids de la composition, et (iv) le solvant est présent dans la composition dans une plage de 50 à 90 % en poids de la composition.

14. Composition selon la revendication 11, comprenant en outre un catalyseur sélectionné dans le groupe consistant en l'imidazole, les dérivés d'imidazole, et des combinaisons de ceux-ci.

15. Composition selon l'une quelconque des revendications 11 à 14, dans laquelle la composition comprend en outre un tensioactif comprenant au moins un parmi (a) une N-alkyl-pyrrolidone, dans laquelle le groupe alkyle est dans une plage de C1à C10, (b) un éther alkylique de polyéthylène glycol produit à partir de la réaction d'un alcool de Guerbet en C1 à C18 et d'oxyde d'éthylène et (c) un tensioactif de type diol acétylénique représenté par au moins une des formules (I) et (II) : 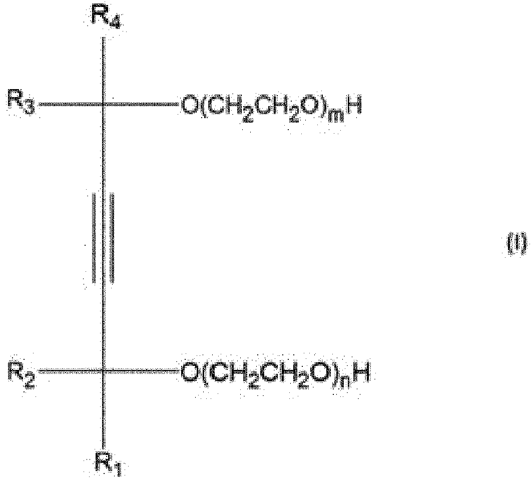 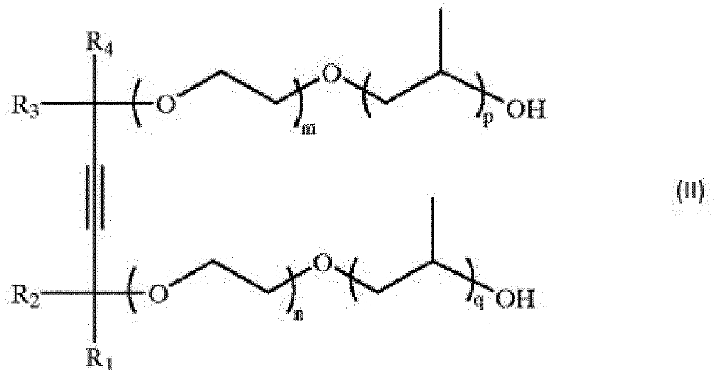 dans laquelle R₁ et R₄ sont des chaînes alkyle droites ou ramifiées présentant 1 à 4 atomes de carbone ; R₂ et R₃ sont H, ou des groupes méthyle ou éthyle ; (m + n) est dans une plage de 2 à 40 ; et (p + q) est dans une plage de 1 à 20.
